(19) Europäisches Patentamt
European Patent Office
Office européen des brevets

(11) EP 0 930 723 A2

(12) EUROPEAN PATENT APPLICATION

(43) Date of publication:
21.07.1999 Bulletin 1999/29

(51) Int Cl.6: H04B 1/707

(21) Application number: 99100692.5

(22) Date of filing: 14.01.1999

(84) Designated Contracting States:
AT BE CH CY DE DK ES FI FR GB GR IE IT LI LU MC NL PT SE
Designated Extension States:
AL LT LV MK RO SI

(30) Priority: 14.01.1998 JP 1763398
01.06.1998 JP 15104898
10.08.1998 JP 24482298

(71) Applicant: Yozan Inc.
Tokyo 155-0031 (JP)

(72) Inventors:
- Zhou, Changming
Tokyo 155-0031 (JP)
- Zhou, Yuping
Tokyo 155-0031 (JP)

(74) Representative: Grünecker, Kinkeldey,
Stockmair & Schwanhäusser Anwaltssozietät
Maximilianstrasse 58
80538 München (DE)

# (54) Direct sequence code division multiple access cellular system

(57) A (direct-sequence code division multiple access) DS-CDMA cellular system includes a plurality of cells cach having one base station and a plurality of mobile stations. A signal transmitted form the base station is distinguishcd by a long codes each of which is different from the others being uniqucly allocated to each cell. A long code synchronization timing being dctcctcd by a correlation using a common short code. The long codes arc scarchcd in each mobile station by a partial correlation in a timing according to the long codc synchronization timing. The partial correlation is a correlation bctwccn a signal received and a segment of a code defined by a part of the long code, the part being shifted in the long code.

Further, the long codes arc classified into a plurality of long code groups defined by long codc group identification codes. A delay profile of the long code group identification codc is detected and is compensated in fading according to said short code. Then, the long code group identification code is combined by rakc combining, and is demodulated.

Fig.2

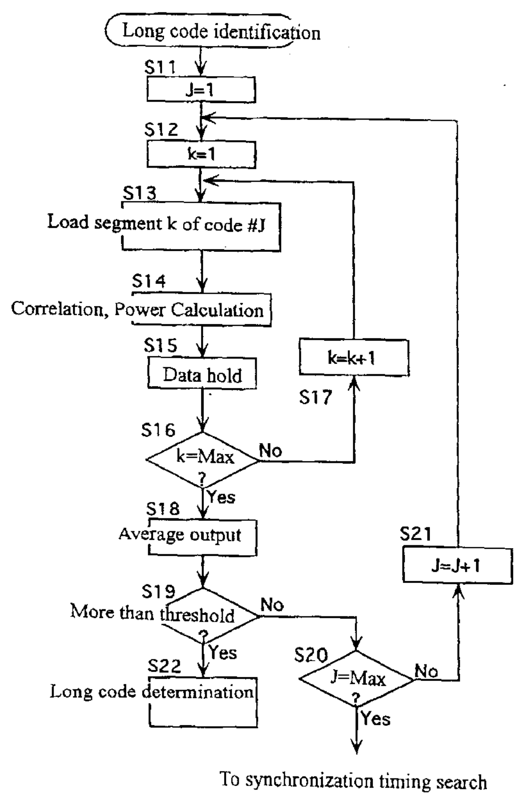


EP 0 930 723 A2

## Description

## Detailed Description of the Invention

Background of the Invention

*Field of the Invention*

The present invention relates to a DS-CDMA cellular system using a long spreading code.

*Prior Art*

Recently, the direct sequence code division multiple access (DS-CDMA) cellular system attracts attention as the users of the land mobile communication increase, because the DS-CDMA system has a hot of capacity in each channel. The DS-CDMA system is lower in frequency usage efficiency due to interference between among a plurality of mobile stations or a plurality of base stations than other systems such as the frequency division multiple access (FDMA) system and the time division multiple access (TDMA) system. However, in the DS-CDMA system, the special reuse efficiency (cell repetition ratio of one frequency) contributes the total frequency efficiency, so it is possible to realize a system with high interference tolerance and high cell repetition ratio.

There are two types of DS-CDMA system, that is, a synchronous system among base stations and an asynchronous system among base stations. The time synchronization is strictly performed among base stations in the synchronous system by means of an external synchronization system such as a global positioning system (GPS), and the synchronization is not performed in the asynchronous system. The synchronous system has advantages that the initial cell search can be easily completed by a timing synchronization of a long code because the same long code is used for all of the base stations with different delay times, and that the peripheral cell search during a hand-over can be quickly completed because a code delay information of peripheral base stations is given to a mobile station.

While, in the asynchronous system, the long code allocated to one base station is different from the long codes of other base stations for distinguishing the base stations. Each mobile station has to judge the long code during the initial cell search. In the peripheral cell search, one long code is found among a plurality of long codes used in the peripheral base stations according to an information of peripheral base stations given by the current base station. Therefore, the search time is much longer than that of the synchronous system.

A cell search scheme for quick acquisition in the asynchronous is proposed in "Two-stage Rapid Acquisition Scheme in DS-CDMA Asynchronous Cellular System" by Kenichi HIGUCHI, Mamoru SAWAHASHI and Fumiya ADACHI, Technical Report of IEICE, CS-96, RCS96-012(1996-05). In this scheme, first a long code timing is detected according to a despread of a short code common to all of the base stations by means of a matched filter, then the long code is judged by means of a matched filter or a sliding correlator.

Next, the acquisition scheme is described. A symbol is twice spreaded by one of long codes LC#1, LC#/2, ..., LC#N corresponding to base stations BS1, BS2, ..., BSN, and by one of short codes SC#0, SC#2, ..., SC#M corresponding to a plurality of channels. The short codes SC#0, SC#2, ..., SC#M are common for every cells.

The acquisition scheme is detailed described with reference to Fig.25. There are shown signals in the upper half area, upper than a chained line, which are transmitted from the base stations BSk, BSk+1, BSk+2 and are received by a mobile station. An acquisition result is shown in the lower half area. The mobile station has a plurality of control channels through which the signals from the base stations BSk, BSk+1 and BSk+2 are received. In the control channels, a symbol, shown by hatched rectangles, is despread by a short code SC#0 common to the total base stations at a predetermined symbol timing in each long code period. At the other symbol timings, the signal is despread twice by the above short code SC#0 and by a long code LC#i allocated to the corresponding base station in each control channel. The long code of one base station is different from those of the other base stations. Therefore, even when signals from a plurality of base stations are received simultaneously, the signals for control can be demodulated without any confusion. Then, the signals for control are received asynchronously by the mobile station as one multiplexed signal.

The mobile station performs the cell search in two steps, as follows. At the first stage in Fig.25, a correlation between a replica of the short code SC#0 of the control channel and a sample of the received signal, by means of a matched filter. Since the symbol spreaded by the common short code SC#0 exists at a predetermined timing in every long code period, as mentioned above, a correlation peak by the short code SC#0 indicates a synchronous timing for receiving the signals spreaded by the long codes.

At the second stage in Fig,25, a plurality of long codes LC#i are selected from long code LC#I to LC#N one after another, and composite codes are successively generated by each of the selected long codes and the short code SC#0. Correlation is calculated between each of the composite codes and the received signal at the synchronous timing detected in the first stage by means of a sliding correlator. For the acquisition, the long codes are selected from the total long codes determined, while for the peripheral cell search, only the long codes designated by the current base station. The correlation calculated is repeated until a correlation peak exceeds a threshold. When the correlation peak exceeds the threshold, the long code applied is determined to be the long code of the control channel. Then, the base station is determined and the cell search is finished.

Since the timing synchronization and the long code identification are independently performed from each other, the cell search time becomes much shorter. The number of cell search is decreased to be (Number of spread code length + Number of spread code phases) comparing to the number of (Number of spread code length × Number of spread code phases ) in the synchronous system.

In the Japanese Patent Publication Hei10-200447, the inventors of the present invention proposed an improved acquisition scheme in the asynchronous cellular system among base stations. In this scheme, a segment of the composite code, much shorter than the composite code as it is, is used for the correlation calculation. The long code identification and the acquisition are quickened.

Fig.26 shows a receiving system for the proposed scheme. The reference number 1 is a complex matched filter, 2 is a spreading code generator, 3 is a electrical power calculator, 4 is a judging portion of long code timing synchronization, 5 is a threshold calculator and 6 is a long code identification portion. The matched filter 1 comprises, a shift register 11 which samples with shifting a received base band signal synchronously to a sampling clock CL and has a number of stages equal to a number of chip of the segment, for example 128 stages; a pseudo-noise (PN) code register 12 to which the segment is loaded; a plurality of multiplication circuits 13, for example number of 128, for multiplying corresponding data of the shift register 11 and of the PN code register 12; and an adder 14 for summing up outputs of the multiplication circuits 13. The matched filter 1 may be a circuit consisting of a charge-coupled device (CCD), a surface acoustic wave (SAW) device or a digital circuit. However, the matched filter in the proposed circuit is the most advantageous in view of the calculation speed, electrical power consumption and accuracy.

A transmission signal of a radio frequency (RF) from a base station is input through a receiver antenna to a radio frequency receiver portion for converting the radio frequency signal into a intermediate frequency signal. The converted signal is multiplied by an output of an intermediate frequency oscillator and passed through a low-pass filter to be a base band received signal. The base band signal is input to the matched filter 1 so that the correlation with the spreading code replica supplied from the spreading code generator 2. The power calculator 3 calculates an electrical power of a correlation output of the matched filter 1 and outputs the calculation result to the judging portion of long code timing synchronization 4, the threshold calculator 5 and the long code identification portion 6. The matched filter is a complex matched filter for calculating the correlation of an in-phase (I) component and a quadrature (Q) component. The power calculator 3 calculates a squared absolute value ($I^2+Q^2$) of the correlation of both components.

The spreading code generator 2 is controlled by the judging portion of long code timing synchronization 4 and the long code identification portion 6. The spreading code generator outputs the short code SC#0 during the acquisition, and outputs the composite codes made by each of the long codes LC#i of the base stations and the short code SC#0 one after another, after the long code synchronization timing is detected.

During the peripheral cell search before the hand-over, the common control code is received similarly to the acquisition for establishing the long code synchronization timing. When a long code synchronization timing is established for the next base station after the hand-over, the segments of the composite codes made by the short code SC#0 and the segments of the long codes LC#i to be searched are output one after another from the spreading code generator 2.

In the acquisition, the judging portion 4 loads the short code SC#0 from the spreading code generator 2 to the PN code register 12 in the matched filter 1. Simultaneously, the judging portion 4 outputs a timing of the maximum power of an average of the correlation over a predetermined number of long code periods, to the spreading code generator 2 and to the threshold calculator. The threshold calculator 5 calculates a threshold for the long code identification portion 6 according to the maximum power at the timing of the long code timing synchronization.

In the peripheral cell search for the hand-over, the short code SC#0 is loaded from the spreading code generator 2 to in the matched filter 1, similarly to the above. Timing is detected of the maximum power of an average of the correlation over a predetermined number of long code periods, by the composite codes made by other long codes than that of the current base station. The timing is output to the spreading code generator 2 and the threshold calculator as the long code synchronization timing of the next base station. The spreading code generator 2 loads the first segment to the matched filter 1.

After the long code synchronization timing is detected, the long code identification portion 6 loads the segments of the composite codes one after another, and compares the output of the power calculator 3 with the threshold. If the power is more than the threshold, a code number of the long code of the composite code is output for defining the next base station.

The outputs of the matched filter 1 and the power calculator 3 are output to a received data processor (not shown), if necessary. The output of the matched filter 1 is output to the rake combiner, the output of the power calculator 3 is output to a multi-path detector for path-diversity reception.

The proposed scheme is further detailed described with reference to Figs.27 and 28 showing flow charts.

In Fig.27(a), the scheme consists of two stages of i) a long code timing detection process (step S100) and ii) a long code identification process (step200), as mentioned above. Fig.27(b) shows a flow chart of the long code timing detection process.

In step S101, the common short code SC#0 is loaded from the spreading code generator 2 to the PN code register 12. Then, the matched filter 1 output the correlation between the sample of the base band signal and the common short code SC#0. In step S102, the power calculator calculates the power of the output from the matched filter 1. In step 3, the power over the threshold and the timing thereof are registered and the average of the power is calculated. The maximum average value is extracted for determining the timing of the chip synchronization and long code synchronization.

Fig.28 shows a shows a flow chart of the long code identification process S200. First, a number "j" of long codes is initialized to be "1" in step S201. The segment of the predetermined length of N chips, for example N=128, is loaded to the PN code register 12 in step S202. Then, the matched filter 1 calculates a correlation between the sample of the received signal and the segment of the composite code #1. It is judged whether the power output from the power calculator 3 is bigger than the threshold calculated by the threshold calculator 5 or not in step 203. If the judgment is "YES", the number "j" is determined to be the long code number.

If the judgment is "NO", it is judged whether the number "j" is the last number of the long codes or not in step S203. If it is not the last number, the number is increased by "1" in step S205, and then returned to the step S202. The correlation is calculated again by the composite code made by the new long code. If the long code is the last, the long code synchronization timing is deemed to be erroneous and the detection of the long code synchronization timing is restarted from the step S100.

Fig.29 shows the correlation calculation result in detail. In Fig.29, the horizontal coordinate is time and (a) shows the sample of the received base band signal input to the shift register 11 of the matched filter I, and (b) shows the segment of N (-128) chips of the composite codes #1 to #512. As for the composite code #1 made by the short code SC#0 and the long code #1, the first 128 chips are loaded to the PN code register 12 so as to be multiplied to the received base band signal. The receive dbase band signal is input to the shift register 11 and shifted therein in response to the sampling clock CL. The 128 multiplication circuits 13 multiply the corresponding data in the shift register 11 and the PN code register 12. When 128 chips of base band signals are stored in the shift register 11, the output of the adder 14, that is, the correlation output becomes valid. This correlation is a partial correlation by the segment.

The loading of the successive segments is performed every M chips time. So, the next segment of the composite code #2 is loaded to the PN code register 12 when the base band signal is shifted by M chips from the correlation calculation by the first composite code. This time, new M chip signals are input to the shift register 11. The partial correlation is calculated for the data from (M+1)th to (M+128)th chips with the second segment.

The partial correlation is repeatedly calculated every M chips time by the segments successively loaded, until the power of the partial correlation exceeds the threshold and the judgment in the step S203 becomes "YES". The time distance M may be "1". However, it is possible to set M-4 in view of chip synchronization accuracy, change in the correlation peak etc.

In the proposed scheme, the partial signals shifting through the shift register is used for the correlation calculation a plurality of times because the partial correlation by the segment is performed. The long code identification is quickly completed. When the length of the segment is 128, the interval M is 4 and the total number of the long codes is 512, the total search time is 128+(512-1) × 4=2172 chips time.

Furthermore, there is a DS-CDMA system of high speed long code search, in which the long codes are classified into a plurality of long code groups and a long code group index code is transmitted.

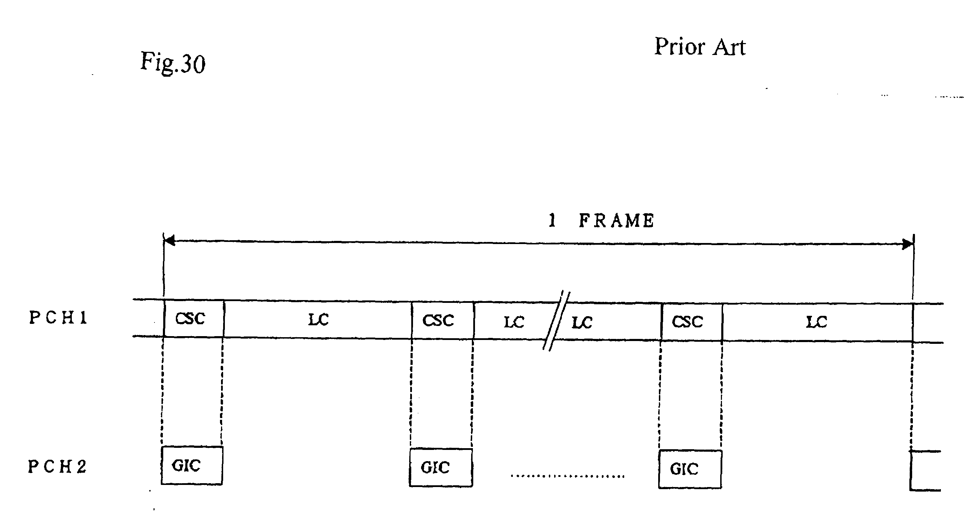

As shown in Fig.30, the common short code CSC and a long code LC is received in the control channel (perch channel) 1 of the receiver. While, the long code group index code GIC is received in the second control channel PCH2. The long code synchronization timing is detected by the common short code SCS, and the long code group index code GIC is despread for determining the long code group. Then, only the long codes belonging to the determined long code group are searched. However, the search speed was not so high because the long code group index code is not always successful due to fading errors etc.

## Summary of the Invention

The present invention has an object to provide a DS-CDMA cellular system capable of long-code search at high speed.

In a DS-CDMA cellular system according to the present invention, a partial correlation is calculated between received signal and a plurality of segments which are extracted from a composite code at different positions.

In a DS-CDMA cellular system according to the present invention, a leading end of a slot is detected from a common short code, and a group identification code is despread at a timing according to the leading end of the slot.

Brief Description of the Invention

Fig.1 is a block diagram showing a long code identification portion applied to a long code search scheme of a first embodiment according to the present invention;
Fig.2 is a flowchart of the first embodiment;
Fig.3 is a timing chart of the first embodiment;
Fig.4 is a block diagram showing a long code identification portion applied to a long code search scheme of a second embodiment according to the present invention;
Fig.5 is a flowchart of the second embodiment;
Fig.6 is a timing chart of the second embodiment;
Fig.7 is a block diagram showing a long code identification portion applied to a long code search scheme of a third embodiment according to the present invention;
Fig.8 is a flowchart of the third embodiment;
Fig.9 is a timing chart of the third embodiment;
Fig.10 is a block diagram showing a long code identification portion applied to a long code search scheme of a fourth embodiment according to the present invention;
Fig.11 is a flowchart of the fourth embodiment;
Fig.12 is a timing chart of the fourth embodiment;
Fig.13 is a block diagram showing a signal reception apparatus applied to the fifth embodiment of the present invention;
Fig.14 is a flowchart showing a signal reception scheme of the fifth embodiment;
Fig.15 is a flowchart showing a process of selecting a group identification code of the fifth embodiment;
Fig.16A is a block diagram showing a detecting portion of slot timing in Fig.13;
Fig.16B is a block diagram showing a GIC detecting portion in Fig.13;
Fig.16C is a block diagram showing a long code search portion of slot timing in Fig.13;
Fig.16D is a block diagram showing a signal reception portion in Fig.13;
Fig.17 is a block diagram showing a frame synchronization establishing portion in Fig.13;
Fig.18 is a block diagram showing a gain control apparatus in a signal reception apparatus of a sixth embodiment of the present invention;
Fig.19 is a timing chart showing signals of the gain control apparatus;
Fig.20 is a block diagram showing a complex matched filter;
Fig.21 is a graph showing a relationship between an absolute signal and a gain;
Fig.22 is a block diagram showing a gain control apparatus in a signal reception apparatus of a seventh embodiment of the present invention;
Fig.23 is a block diagram showing a complex absolute circuit;
Fig.24 is a block diagram showing a absolute circuit in the complex absolute circuit;
Fig.25 is a timing chart of a conventional two-step acquisition scheme;
Fig.26 is a block diagram showing a signal reception apparatus for a two-step acquisition scheme proposed by the inventors of the present invention;
Fig.27 is a flowchart showing the two-step acquisition scheme in Fig.26;
Fig.28 is another flowchart showing the two-step acquisition scheme in Fig.26;
Fig.29 is a timing chart showing the two-step acquisition scheme in Fig.26; and
Fig.30 is a conceptual view of a signal used in another conventional scheme.

Preferred Embodiment

Hereinafter, preferred embodiments of a DS-CDMA cellular system according to the present invention are described with reference to the attached drawings.
Figs.1 to 3 show a first embodiment of a long code search scheme the present invention in which an average of an electrical power of an output from a matched filter is calculated with respect to a plurality of continuous symbols in order to eliminate influences of noises.
Fig.1 is a functional block diagram of a long code identification portion 6 of the first embodiment. In Fig.1, a reference numerous 31 designates an analog to digital (A/D) converter for converting an output of a power calculation portion 3 into a digital data. An output of the A/D converter 31 is input to an averaging portion 32 for averaging powers of correlation of a plurality of symbols. The averaging circuit 32 holds and adds power of correlation of the digital data for a plurality of symbols, and divides the addition by the number of symbols so as to obtain the average. An output of the averaging portion 32 is input to a judgment portion 33 for comparing the output with a threshold calculated by a threshold calculator 5 in Fig.26. The influence of noise is eliminated by averaging the partial correlation. The segment is of a data length equal to a number of chips of one symbol.

When the averaging portion 32 and the judgment portion 33 are constructed by an analog circuit, the A/D converter 31 can be omitted.

The long code identification process of the first embodiment is described with reference to Figs. 2 and 3. The long code identification is performed after a long code timing detection shown in Figs.27(a) and (b). In Fig.3, a horizontal coordinate represents "time", (1) shows a sample data received, and (2) shows a sampling clock CL for sampling the sample data. As mentioned above, the received base band signal is sampled every sampling clocks. Representatively, only a data held in the last stage $SH_{128}$ of the shift register 11 is shown as the sample data. (3) shows the segment (PN segment) stored in the PN register 12 of the matched filter 1, (4) shows the power output from the power calculator 3 of correlation between the sample of received signal and the PN segment, (5) shows the average of the correlation power output from the averaging portion, and (6) shows an output of the judgment portion. In the timing charts including Fig.3, the delay time is neglected and the time distance is set to be "1" for easy understanding.

In the long code identification process, a number J of the composite code to be applied is set to be an initial value "1" at step S11. At step S12, a number k of the segment of the composite code #J is set to be an initial value "1". At step S13, the segment k of the composite code #J is loaded from the spreading code generator 2 (Fig.26) to the PN code register 12 in the matched filter 1. In the embodiment of Fig.3, at time T1, the first segment (#1,1) of the composite code #1 including chips from the first to the $128^{th}$ is loaded. A correlation is calculated between the sample of the received signal and the segment (#1,1), and the power of the correlation is output from the power calculator 3 (Fig.14). At step 15, the power is stored together with the timing data.

At step 16, the number k of the segment is judged whether it is the final segment number or not. In Fig.2 the final k is "3". At the timing T1, the judgment is "NO". Next, k is increased by "1" at step S17 and the process is return to the step S13.

Then, the second segment 2(#1, 2) consisting of chips from the second to the $129^{th}$ is loaded to the PN code register 12. A correlation is calculated between the sample of the received signal and the segment (#1,2), and the power of the correlation is output from the power calculator 3 (step 14) at a time T2. At step 15, the power is stored together with the timing data. At step 16, the number k of the segment is judged again whether it is the final segment number or not. These processes are repeated with shifting the segment until k reaches "3".

When k=3 and the judgment becomes "YES", an average of power of the correlation between the sample and the k symbols of the composite code. At step S19, the average is judged whether it is more than the threshold or not. When the judgment is "YES", the long code corresponding to the composite code is judged as the long code of the base station from which the signals are transmitted, and the long code identification is finished.

If the judgment at step S19 is "NO", it is judged whether the composite code is the final composite code or not. If this judgment is "YES", the detection of long code synchronization timing deemed erroneous, and the process is returned to the step S100 (Fig.15). If the judgment is "NO", the number J of the composite code is increased by "1", and the process is repeated from the step S12. For example, when J=2 and the segment is the first segment (#2,4) of the composite code #2, that is, $4^{th}$ to $131^{th}$ chip of the composite code #2 is loaded to the PN code register 12. Then, the correlation with the sample of the received signal is calculated.

As mentioned above, the long code identification is performed from the averaged correlation power generated by a plurality of segments shifted of a composite code. Since the influence of the noise or fading is reduced due to the above averaging, a misjudgment is decrease. The number k is not limited to "3", any number of correlation outputs can be utilized.

Next, a second embodiment is described with reference to the attached Figs.4 to 6. Fig.4 is a functional block diagram, Fig.5 is a flowchart and Fig.6 is a timing chart of the second embodiment. This embodiment is advantageous in the case that the control channel for long code identification is not modulated and the influence of the noise and fading is less than the first embodiment.

In Fig.4, the output of the matched filter 1 and its power are input to an A/D converter 41. An output of the A/D converter 41 is input to an averaging portion 42 which holds correlation outputs of a plurality of continuous segment, and calculates averages of I- and Q-components when the power is more than a threshold. An electrical power of the averages of the I- and Q-components is calculated in a power calculation portion 43, which power is compared with the threshold for long code judgment.

When the averaging portion 42 and the judgement portion 43 are constructed by an analog circuit, the A/D converter 41 can be omitted.

The second embodiment shown in the flowchart of Fig.5 has a difference from the first embodiment in that the step S34 is only a correlation process, not including the power calculation, and a power calculation portion S39 is added after an averaging portion S38. Since the other processes are similar to those in the first embodiment, and descriptions therefor are omitted.

The timing chart in Fig.6 has a difference from Fig.3 in that the electrical power (5) is calculated after an average (4) is calculated. Since the other processes are similar to those in Fig. 3, descriptions therefor are omitted.

In the second embodiment, positive and negative noises are cancelled because the power is calculated from the averages of the I- and Q-components. The noise reduction effect is higher than the second embodiment. Since the average is zero when the control channel is modulated, this embodiment is effective for a control channel without modulation.

Next, a third embodiment is described with reference to the attached Figs.7 to 9. Fig.7 is a functional block diagram, Fig.8 is a flowchart and Fig.9 is a timing chart of the third embodiment. This embodiment judgment of the long code identification according to an average of correlation powers of a plurality of path. The influence of the noise and fading is less than the judgment according to a single pat in the first and second embodiments.

In Fig.7, the reference number 51 designates an A/D converter for converting the output of the power calculation portion 3 into a digital signal, 52 designates an averaging portion for holding correlation outputs of a plurality of paths output from the A/D converter 51, 53 designates a judgment portion for comparing an output of the averaging portion 52 and the data from the threshold calculator 5 (Fig.26).

In Fig.8 is the flowchart of the third embodiment. Similarly to the above, "J" is the number of the composite codes as well as the long code, "k" is the number of symbols for calculating the average of the correlation from the composite code, and "i" is number of chips of the delay time for detecting the multi-path.

In Fig.9, a horizontal coordinate represents "time", (1) shows a sample data received, and (2), and (3) shows the segment (PN segment) stored in the PN register 12 of the matched filter 1. Hatched waves indicate that peaks are detected at the timing. (4) shows the power output from the power calculator 3 of correlation between the sample of received signal and the PN segment, (5) shows the average of the correlation power output from the averaging portion, (6) shows the average of multi-path correaltion outputs of the plurality of segments, and (7) shows an output of the judgment portion. In the timing charts including Fig.3, "k" is 2 and "i" is 6, then multi-paths of the delay time up to 6 chips can be used.

In the long code identification process, a number J of the composite code to be applied is set to be an initial value "1" at step S51. At step S52 and S53, the numbers k and i are set to be an initial value "1". At step S54, the first segment of $1^{st}$ to $128^{th}$ chips (#1,1) of the first composite code #1 is loaded in the PN code register 12 during a period T1 in Fig.9. A correlation is calculated between the sample of the received signal and the segment (#1,1), and the power of the correlation is output from the power calculator 3 (S55). At step 56, the power is held together with the timing, ant at step S57, the correlation power of a plurality of paths are added.

It also possible to omit the thresholding in the Step 56, when a timing is detected of sufficiently high peaks of the correlation by the short code in the common control channel. The correlation power is recurrently integrated for a plurality of symbols when the long code synchronization timing is detected. The timing of the maximum peak and peaks adjacent the timing within a predetermined time are detected from a plurality of peaks. The output of the power calculator 3 added at these timings are in step S57.

At step 58, it is judged whether the number i is the final number or not. When the judgment is "NO", i is increased by "1" at step S59 and the PN code stored in the shift register 12 is shifted by one stage. Then, a shifted PN code with circulation by one chip, the $128^{th}$ chip and $1^{st}$ to $127^{th}$ chips (#1,1-1) of the composite code are stored in the PN code register 12 during period T2 in Fig.9. When the correlation power (peak) is more than the threshold as shown by the hatched area, the power and its timing are held at step S56. The processes are repeated so that the correlation powers of the paths are added until the number i reach the maximum.

When the judgment at step S58 is "YES", it is judged whether k is maximum or not. When the judgment is "NO", k is increased by "1" at step S62 and the process is returned to step 53. The new segment k of the same composite code J (#1,7-0), $7^{th}$ to $134^{th}$ chips of the composite code #1, is loaded in the PN code register 12 so that a correlation with the sample of the received signal. Then, the correlation is repeatedly calculated by the shifted PN code with circulation in the PN code register 12 until i reach maximum so that the correlation power of the peak is calculated. The processes above are repeated until k reach the maximum. When the judgment of step S61 becomes "YES", an average of correlation power of a plurality of paths are calculated for each segment at step S63. T step S64, the average is judged whether it is more than the threshold or not.

If the judgment at step S64 is "NO", it is judged at step S65 whether the composite code J is the final composite code or not. If the judgment is "NO", the number J of the composite code is increased by "I", and the process is repeated from the step S52. If this judgment is "YES", the detection of long code synchronization timing deemed erroneous, and the process is returned to the step S100 (Fig.15). When the judgment S64 is "YES", the long code J is determined to be the long code number of the base station.

In this embodiment, the correlation powers of a plurality of paths are added in addition to using an average of correlation powers of a plurality of symbols. The influence of noise and fading is less those in the first and second embodiment using single path.

Next, a fourth embodiment is described with reference to the attached Figs.10 to 12. Fig.10 is a functional block diagram, Fig.11 is a flowchart and Fig.12 is a timing chart of the fourth embodiment. This embodiment utilizes the multi-path similarly to the third embodiment. The correlation powers of the multi-paths are not simply summed up, but the correlation of I- and Q-components are compensated in fading, and rake combining is performed for the compensated components. The long code judgment is more accurate. This embodiment is advantageous in the case that the control channel is not modulated.

In Fig.10, the reference numerous 61 is an A/D converter directly receiving the output of the matched filter 1 and 62 is a fading compensation portion for performing fading compensation of an output of the A/D converter. The long code identification is performed by a control channel not modulated. The phase error due to fading is predicted from the averages of the I- and Q-components for a plurality of symbols. The fading compensation portion 62 compensates the fading phase error of the output of the matched filter 1. In the fading compensation, a correction coefficient is calculated from the phase error, by which the I- and Q-components are multiplied.

63 is a rake combining and averaging portion for rake-combining of the output of the fading compensation portion 62 and for averaging the output of the rake combining. 64 is a power calculator for calculating a power ($I^2+Q^2$) of the output of the portion 63. 65 is a judgment portion for judging whether the output of the power calculator 64 with the threshold supplied by the threshold calculator 5 (Fig. 14).

In the flowchart of Fig.11, steps from S71 to S74 are similar to those of the third embodiment in Fig.8. At the step S75, the correlation outputs power of which are over the threshold are held, and the correlation of multi-path is detected by a loop of steps S75 to 78, similarly to above.

It also possible to omit the thresholding in the Step 75, when a timing is detected of sufficiently high peaks of the correlation by the short code in the common control channel.

In Fig.12, the correlation peaks for the first composite code #1.1 are shown in the periods T2, T3 and T6. The fading compensation of each path is performed at step S79 using independent correction coefficients for each path from coefficients of the other paths. At step S80, the rake combining is performed for correlation output of each path compensated in fading. These processes are performed for a plurality of segments of number of k in one composite code (step S82), and the average is calculated at step S83. In the embodiment of Fig.10, the average of the segments #1.1 and #1.7 of the first composite code after the rake combining.

The segment is not limited to the segment of a composite code made by the long code and the short code common to the total cells. Segments can be used, such as a segment of long codes uniquely allocated to the cells, or, a composite code multiplied by "+1" or "-1", which composite code is made by a the above segment and the common short code.

Next, the fifth embodiment of the present invention is described with reference to the attached Figs. 13 to 17.

Fig.13 shows a signal reception apparatus for the fifth embodiment, including a high frequency reception portion HFR for receiving a signal of a radio frequency and for converting the signal into a intermediate frequency signal. The intermediate frequency signal is divided into I- and Q-components by a quadrature detector QD. These components are passed through a low-pass filter LPF. The output of the low-pass filter LPF is input parallelly to a slot timing detector ST, a long code identification code GIC detector GD, a frame synchronization establishing portion FS, a long code search portion LCS, and a signal reception portion SR. These portions cannot be clearly classified in a practical system because there a hot of circuits commonly used by a plurality of portions.

Fig.14 is a flowchart of a signal reception scheme according to the present invention. At step S201, a common short code CSC is continuously observed by the slot timing detector ST, and a power of a despread output is stored at step S202. The power is averaged for a plurality of slots at step S205. A slot leading edge timing is determined according to the average at step S205. At step S206, a long code group identification code GIC is selected according to the slot leading timing. For the GIC selection, a correlation between the GIC received and each of predetermined GICs is performed and correlation results are compared with one another. When the GIC selection failed, the process is returned to the step S201. When the GIC selection succeeded, the selected GIC is reset to the matched filter at step S208. A multi-pat pattern and a delay profile are detected according to the correlation output after the resetting.

At step S210, GIC and CSC are despread, and a correction coefficient for fading compensation is calculated at step S211. The fading compensation of GIC is performed by the correction coefficient at step S212, and the rake combining of the GIC is performed according to the delay profile at step S213. The correlation between the signal after the rake combining and predetermined GIC modulation patterns so that a frame synchronization is judged at step S214. After the frame synchronization is established, correlation is calculated by the long codes in the long code group designated by the GIC so that one long code is determined at step S215.

Fig.15 shows the GIC selection step (S206) in detail. First, a loop counter i is initialized to "1", and the $i^{th}$ GIC code (GIC#1) is loaded to the matched filter at step S302. A correlation power of GIC code is detected at step S303, the correlation outputs are averaged for a plurality of slots at step S304. When the average is over a threshold (step S305), the GIC#1 is successively found (step S306). None of the correlation outputs does not exceed the threshold, it is judged that the selection failed (step S307). When there is another GIC code GIC#i to be searched, the loop counter is increased by "1", and the process is returned to the step S308.

Fig.16A shows the slot timing detection portion ST is detail. The slot timing detection portion ST includes a matched filter MF4 for despreding the I- and Q-components by the common short code. The despread I- and Q-componcnts COI4 and COQ4 are output as correlation outputs by the common short code to the frame synchronization detection portion FS in Fig.13. The signals COI4 and COQ4 are input to a power calculator PWR4 for calculating the correlation power S41. When the correlation power S41 is more than the threshold, it is judged that the common short code is detected. The correlation power S41 is averaged for a plurality of slots by a averaging circuit AVG4. The averaged power S42 is judged in a judging portion JUD4 for detecting a timing of a leading end of the slot. The detected slot leading end is output as a signal SL0 and input to a frame synchronization establishing portion FS. The common short code CSC is reset in the matched filter MF4.

Fig.16B shows the long code group identification code detection portion GD. The long code group identification code detection portion includes a matched filter MF5 for despreding the I- and Q-components by a plurality of predetermined long code group identification codes GIC. The despread I- and Q-components COI5 and COQ5 are input to a power calculator PWR5 for calculating the correlation power S51. The correlation power S51 is averaged for a plurality of slots by a averaging circuit AVG5. The averaged power S52 is judged in a judging portion JUD5 for selecting one GIC from comparison of the averaged power with a plurality of predetermined GIC. The selected GIC is reset in the matched filter MF4, as well as, is output to the frame synchronization detection portion FS and long code search portion LCS (Fig.13) as a signal GICo.

Fig.16C shows the long search portion LCS. The long code search portion includes a matched filter MF7 to which a long code in the selected long code group is set. The despread outputs consists of I- and Q-components COI7 and COQ7 which are input to a power calculator PWR7 for calculating the correlation power S71. The correlation power S71 is averaged for a plurality of slots by a averaging circuit AVG7. The averaged power S72 is judged in a judging portion JUD7 for selecting one long code from comparison of the averaged power with a plurality of long codes in the long code group. The selected long code is reset in the matched filter MF7, as well as, is output to the signal reception portion SR (Fig.13) as a signal LCSo.

Fig.16D shows the signal reception portion SR which includes a matched filter MF8 to which the selected long code is set at a timing of the frame synchronization signal FSo. An output of the matched filter MF8 consists of I- and Q-components COI8 and COQ8, respectively, which are input to a fading compensation portion FC8. An output of the fading compensation portion FC8 is input to a rake combiner RK8 for rake combining. The received signal after the rake combining is input to a channel codec portion for reproducing the information signal transmitted.

Fig.17 shows a frame synchronization establishing portion FS in detail. The frame synchronization establishing portion FS includes a matched filter MF6 for despreding the I- and Q-components by the selected GICo. GICo is modulated by a predetermined pattern. The despread I- and Q-components COI6 and COQ6 are input to a power calculator PWR6 for calculating the correlation power. The correlation power S51 is input to a delay profile detection portion PRFL for detecting a delay profile from the correlation power. The delay profile is input together with the CSCI and CSCQ to a correction coefficient calculation portion CCC for calculating a correction coefficients CCI and CCQ of I- and Q-components, respectively. The output COI6 and CDQ6, the correction coefficients CCI and CCQ are input to a fading compensation portion FC6 for fading compensation of COI6 and COQ6. The received signal after the rake combining is input to a rake combiner RK6 for rake combining. The signal after the rake combining is input to a frame matched filter FMF for calculating a correkation between the signal after the rake combining and a modulation pattern of GICo. A power is calculated from this correlation by a power calculator PWR6, and a judgment portion JUDG judges frame synchronization according to the power. When the frame synchronization is established, the judgment portion JUDG6 outputs a frame synchronization signal FS to the signal reception portion SR.

Figs.18 to 24 show a gain control apparatus utilized for the above embodiments. This gain control apparatus calculates a gain of an amplifier from a norm of I- and Q-components of an output of a complex matched filter or a quadrature detector.

Fig. 18 is a block diagram of a first embodiment of the gain control apparatus. A radio frequency (RF) signal received by an antenna is downconverted to be a intermediate frequency (IF) signal that is input to an amplifier (VGA) 11. An output of the amplifier 11 is input to a quadrature detector including multiplication circuits 12 and 13, a phase shifter and an oscillator 14. The output of the amplifier is multiplied, in the multiplication circuits 12 and 13, by a wave generated by the oscillator 14 and a wave delayed by a phase of ($\pi/2$) from the above wave, respectively. Outputs of the multiplication circuits 12 and 13 are I- and Q-components of the intermediate signal, which are passed through lowpass filters 16 and 17, respectively, for eliminating high frequency components. Outputs of the lowpas filters 16 and 17 are input to a complex matched filter 20 for despreading the I-and Q-components by spreading codes stored in a spreading code memory means 21. The despread signal is usually a multi-path signal including a plurality of signals originated from one signal but transferred through different transfer-paths. Therefore, a plurality of correlation peaks occur within one symbol period of the outputs of the matched filter 20. Fig.19 shows the plurality of peaks by a reference S1.

The multi-path signals S1 of the I-and Q-components are input to sampling and holding circuits 31 and 32 for holding the signals, respectively. The sampling and holding circuit 31 and 32 are controlled by a controller 45 for selectively holding peaks of rather high level. The outputs of the matched filter 20 is input to a level detection circuit 41 for calculating a norm (absolute value) of the I- and Q-components. The level detection circuit 41 further compares the norm with a predetermined threshold so as to output peaks higher than the threshold. The extracted peak data is converted by an analog to digital (A/D) converter 42 into a digital signal. The digital signal is averaged by a recurrent integration circuit 43 for a plurality of symbol periods, and significant peaks are extracted from the averaged signal. The controller supplies sampling and holding signals S2 (Fig.19) to the sampling and holding circuits 31 and 32. Therefore, the sampling and holding circuits 31 and 32 hold only significant correlation peaks.

Outputs of the sampling and holding circuits 31 and 32 are converted by analog to digital (A/D) converters 33 and 34, respectively, into digital signals, and are input to a coherent detector 35. The coherent detector 35 performs fading compensation for eliminating influences of fading so that the I- and Q-components are perfectly separated. Then, the plurality peaks of I-and Q-components within one symbol period are combined by a rake combiner 36. An output of the rake combiner 36 is a rake-combined signal S3 shown in Fig.19.

The output of the A/D converter 42 is further input to a gain calculation circuit 51 for calculating gains of amplification of the above RF signal and the above IF signal. The amplifier RF-AGC for amplifying the RF signal is not shown. The gain for amplification of the IF signal is input through an analog to digital (A/D) converter 52 to the amplifier 11. Then, amplification gains are optimized.

Fig. 20 is a block diagram of the matched filter 20 of 256 taps, for example. The matched filter 20 includes 256 sampling and holding circuits SH1 to SH256 for holding the I- and Q-components. A plurality of multiplication circuits M1 to M256 are connected to the sampling and holding circuits SH1 to SH256, respectively, for multiplying the components by spreading codes for each components. Outputs of the multiplication circuits M1 to M256 are integrated and added by an adder 22. The spreading code is a sequence of one bit data, and the matched filter multiplies "+1" when the bit is "1" and "-1" when the bit is "0". The adder subtracts a summation of signals multiplied by "-1" from a summation of signals multiplied by "+1". An output of each components from the adder 22 is a voltage signal and is adjusted to be a proper level by a scaling circuit 23. The sampling and holding circuits are serially connected for receiving a new signal at the first stage SH1 and transferring the signal successively towards the last stage SH256.

An algorithm for calculating the gain in the gain calculation circuit 51 is shown in Fig.21. In Fig.21, the horizontal coordinate represents power (norm) of the I- and Q-components, and the vertical coordinate represents the gain. The gain decreases stepwisely as the power increases in a area of gain between a lower threshold *0* and an upper limit Max. This algorithm is given by a table which output a gain G1 when the power is between W1 and W2 corresponding to the gain G1. When the power is equal to Max, the gain is set to be lower limit value of Gm.

The gain obtained by the gain calculation circuit 51 is determined so that the output from the rake combiner 36 is in an adequate range of level. Even when a deviation occurs due to shadowing etc. in the received signal, the gain is quickly and adequately adjusted. So, the demodulated signal is good in S/N ratio.

Fig.22 shows another embodiment of the gain control apparatus. Differently from the embodiment in Fig.18, the gain calculation circuit 51 receives signal before the complex matched filter 20. The signal before the complex matched filter 20, that is, after the lowpass filters 16 and 17 are input to an absolute circuit 60 for calculating an absolute value of the I- and Q-components. The absolute value is input to an A/D converter 61 for converting the absolute value into a digital signal. The digital signal is input to the gain calculation circuit 51. The gain control circuit 51 is similar to that in Fig.18. In this embodiment, it is possible to calculate the gain according to the total signals received so as to prevent over-range of the amplifier 11, in addition to the advantages of the embodiment in Fig.18.

Fig.23 shows the absolute circuit 60 in detail. The absolute circuit 60 calculates an approximation value of an absolute of a complex number. The absolute circuit 60 includes a first and second absolute circuits 71 and 72 for adding I- and Q-components, from the lowpass filters 16 and 17, to an offfset voltage (Vdd/2), respectively. Here, Vdd is a supply voltage. The outputs of the absolute circuits 71 and 72 are integrated by capacitive couplings 62 and 63. The capacitive coupling 62 includes capacitances 62a and 62b receiving outputs of the absolute circuits 71 and 72, respectively. The capacitive coupling 63 includes capacitances 63a and 63b receiving outputs of the absolute circuits 71 and 72, respectively. Outputs of the capacitances 62a and 62b are commonly connected to an inverter 64, and outputs of the capacitances 63a and 63b are commonly connected to an inverter 66. Outputs of the inverters 64 and 67 are connected through feedback capacitances to their inputs, respectively.

The capacitances 62a, 62b and 65 have capacities of a ratio of 2:1:2. The capacitances 62a, 62b and 65 have capacities of a ratio of 1:2:2. Then, output voltage V64 and V66 of the inverter 64 and 66 are defined by the formulae (1) and (2).

$$V64 = \frac{1}{2}Vdd - \frac{C1 \bullet Abs(I) + C2 \bullet Abs(Q)}{C3}$$

$$= \frac{1}{2}Vdd - \left(Abs(I) + \frac{1}{2}Abs(Q)\right) \quad (1)$$

$$V66 = \frac{1}{2}Vdd - \frac{C4 \bullet Abs(I) + C5 \bullet Abs(Q)}{C6}$$

$$= \frac{1}{2}Vdd - \left(\frac{1}{2}Abs(I) + Abs(Q)\right) \quad (2)$$

Here, C1, C2, C3, C4, C5 and C6 are capacities of the capacitances 62a, 62b, 65, 63a, 63b and 67. Abs(I) is a voltage signal output from the absolute circuit 71, and Abs(Q) is a voltage signal output from the absolute circuit 72.

The outputs of the absolute circuits 71 and 72 are input to a comparator 81 for outputting a comparison signal SC indicating which of outputs Abs(I) and Abs(Q) is larger than the other. The comparison signal SC and outputs V64 and V66 are input to a multi-plexer 82 for selectively outputting the larger of the V64 and V66 in response to the signal SC.

An output of the multi-plexer 82 is input through a capacitance 83 to an inverter 84 an output of which is connected through a feedback capacitance 85 to its input. Since the capacitances 83 and 85 have capacities C7 and C8 equal to each other, the second terms of the outputs shown in the formula (1) and (2) are reversed by the inverter 84. An output V60 of the absolute circuit 60 is an addition of the reversed voltage and the offset voltage (Vdd/2).

The output V60 is defined as in the formulae (3) and (4).

When Abs(1)≧Abs(Q),

$$V60 = Vdd - V64 = Abs(I) + \frac{1}{2}Abs(Q) - \frac{1}{2}Vdd \quad (3)$$

When Abs(I)<Abs(Q),

$$V60 = Vdd - V66 = \frac{1}{2}Abs(I) + Abs(Q) - \frac{1}{2}Vdd \quad (4)$$

Fig.24 shows the absolute circuit 71 in detail. The descriptions for the absolute circuit 72 is omitted because it is similar to the circuit 71. The absolute circuit 71 includes a MOS inverter 73 for judging whether an input voltage Vin is more than a threshold Vdd/2, and for outputting a voltage of Vdd when Vin is not more than Vdd/2, and a voltage of 0V when Vin is more than Vdd/2. The input voltage Vin is input through a capacitance 74 to an inverter 75 an output of which is connected through a feedback capacitance 76 to its input. The capacitances 74 and 76 have capacities equal to each other so as to output an inversion of a difference between Vin and Vdd/2 stably and accurately. A multi-plexer 77 is provided for receiving the input voltage Vin and the output of the inverter 75. The multi-plexer 77 is controlled by the output of the inverter 73 so as to output Vin when Vin≧Vdd/2, and to output an inversion (Vdd-Vin) when Vin<Vdd/2.

For example, when Vdd=10V, the offset voltage is 5V. When the input voltage is 8V, the output of the absolute circuit 71 is 8V, while, when Vin=3V, the output=7V.

The gain control apparatus is not limited for the signal reception apparatus for log code search, but applicable to any types of DS-CDMA communication system.

## Claims

1. A DS-CDMA cellular system comprising a plurality of cells, each having one base station, and a plurality of mobile stations, a short code being defined commonly to all of said cells, a plurality of long codes each of which is different from the others being uniquely allocated to each cell, a long code synchronization timing being detected by a correlation using said short code, said long codes being searched in each said mobile station by a partial correlation in a timing according to said long code synchronization timing, characterized in that:

    said partial correlation is a correlation between a signal received and a segment of a code defined by a part of said long code, said part being shifted in said long code.

2. A DS-CDMA cellular system as claimed in Claim 1, further comprising:

    a complex matched filter in each said mobile station for said partial correlation and for despreading said long code;
    a power calculator for calculating a power of an output of said matched filter;
    a long code synchronization timing judgment portion for judging a synchronization timing of said long code according to an output of said power calculator; and
    a long code identification portion for determining a long code according to said output of said power calculator and an output of said long code synchronization timing judgment portion.

3. A long code search scheme for DS-CDMA cellular system including a plurality of cells, each having one base station, and a plurality of mobile stations, a short code being defined commonly to all of said cells, a plurality of long codes each of which is different from the others being uniquely allocated to each cell, comprising steps of:

    detecting a long code synchronization timing by a correlation using said short code; and
    searching said long codes in each said mobile station by a partial correlation in a timing according to said long code synchronization timing, said partial correlation being a correlation between a signal received and a segment of a code defined by a part of said long code, said part being shifted in said long code.

4. A long code search scheme as claimed in Claim 2, wherein said code defined by said long code is a composite code made by said long code and said common short code.

5. A long code search scheme as claimed in Claim 2, wherein said code defined by said long code is composite code made by logical exclusive-or calculation of said long code and said common short code.

6. A long code search scheme as claimed in Claim 2, wherein said code defined by said long code is said long code itself.

7. A long code search scheme for DS-CDMA cellular system including a plurality of cells, each having one base station, and a plurality of mobile stations, a short code being defined commonly to all of said cells, a plurality of long codes each of which is different from the others being uniquely allocated to each cell, a plurality of long code groups and long code group identification code for indicating said group being defined, comprising steps of;

    detecting a delay profile of said long code group identification code;
    compensating said long code group identification code in fading according to said short code; and
    rake combining of said long code group.

8. A DS-CDMA cellular system comprising a plurality of cells, each having one base station, and a plurality of mobile stations, a short code being defined commonly to all of said cells, said short code being transmitted every slots, a plurality of long codes each of which is different from the others being uniquely allocated to each cell, said long codes being transmitted every frames, a plurality of long code groups and long code group identification code for indicating said group being defined, defining a timing of said long code group identification code by a correlation using said short code, said long codes groups being searched in each said mobile station by a correlation in a timing according to said timing, said long codes being searched within a long code group searched, characterized in that:

    a delay profile of said long code group identification code is detected, said long code group identification code is compensated in fading according to said short code, said long code group identification code is combined by rake combining after the fading compensation, said long code group identification code is demodulated after said rake combining.

**9.** A DS-CDMA cellular system as claimed in Claim 8, further comprising:

a first matched filter for despreading said common short code;
a second matched filter for despreading said long code group identification codes;
a phase compensation incans for detecting fading distortion of said common short code according to an output of said first matched filter and for compensating long code group identification code in fading according to said fading distortion; and
a rake combiner for rake combining of an output of said phase compensation means.

**10.** A DS-CDMA cellular system as claimed in Claim 8, further comprising:

a third matched filter for holding an output of said rake combiner for a plurality of said slots and for calculating a correlation between said long code group identification code and a modulation pattern of said long code group identification code; and
a frame synchronization judgment portion for judging whether a frame synchronization is established or not.

**11.** A DS-CDMA cellular system comprising

a plurality of cells each having one base station which transmits a signal spread by a spreading code; and
a plurality of mobile stations each of which comprising:

a high frequency reception portion for receiving a radio frequency signal from said base stations, for amplifying said radio frequency signal and for converting said radio frequency signal into an intermediate signal;
an intermediate frequency amplifier for amplifying said intermediate signal;
a quadrature detector for extracting I- and Q-components from said intermediate signal;
a matched filter for timing according to said timing, said long codes being searched within a long code group searched,

characterized in that:

a delay profile of said long code group identification code is detected, said long code group identification code is compensated in fading according to said short code, said long code group identification code is combined by rake combining after the fading compensation, said long code group identification code is demodulated after said rake combining.

Fig. 1

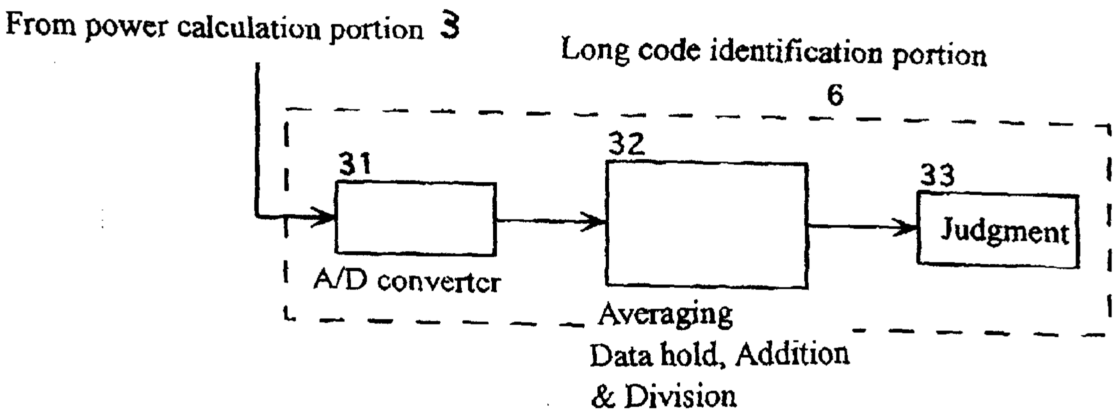
From power calculation portion 3
Long code identification portion
6
31
32
33
Judgment
A/D converter
Averaging
Data hold, Addition
& Division

Fig.2

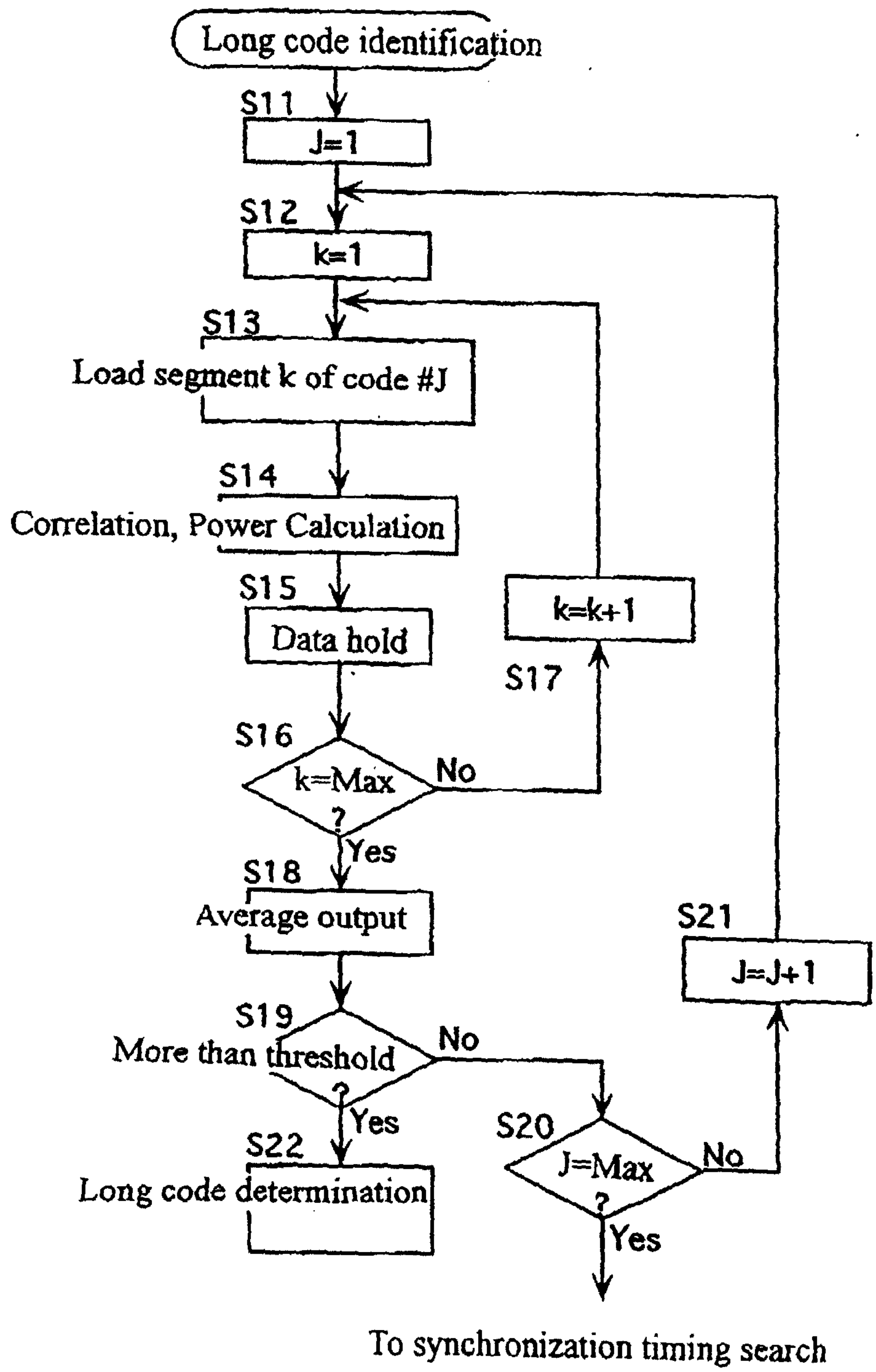
Long code identification
S11
J=1
S12
k=1
S13
Load segment k of code #J
S14
Correlation, Power Calculation
S15
Data hold
k=k+1
S17
S16
k=Max ?
No
Yes
S18
Average output
S21
J=J+1
S19
More than threshold ?
No
Yes
S20
S22
J=Max ?
No
Long code determination
Yes
To synchronization timing search

Fig.3

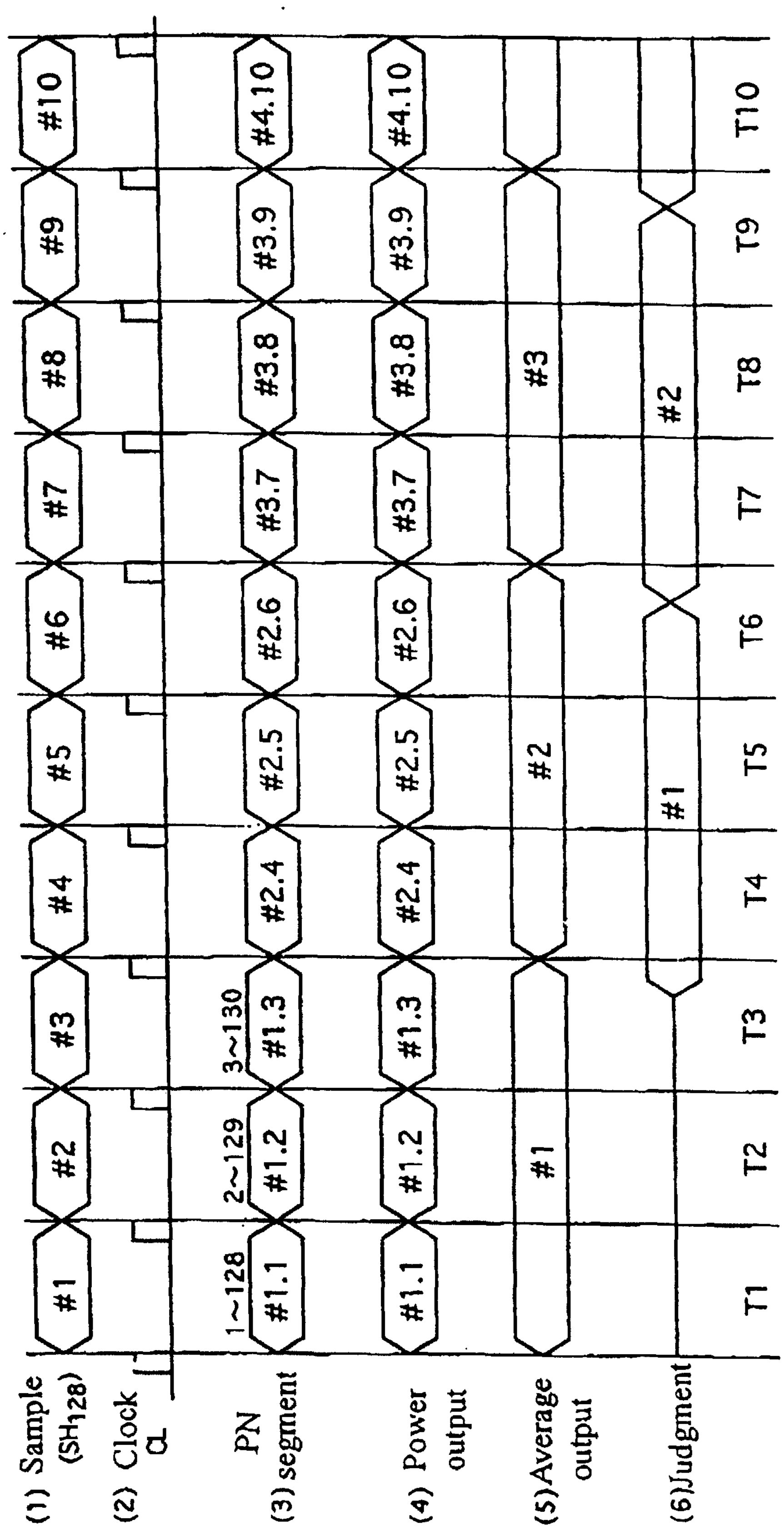
(1) Sample (SH128)
(2) Clock α
PN (3) segment
(4) Power output
(5) Average output
(6) Judgment
#1
#2
#3
#4
#5
#6
#7
#8
#9
#10
1~128
2~129
3~130
#1.1
#1.2
#1.3
#2.4
#2.5
#2.6
#3.7
#3.8
#3.9
#4.10
T1
T2
T3
T4
T5
T6
T7
T8
T9
T10

Fig.4

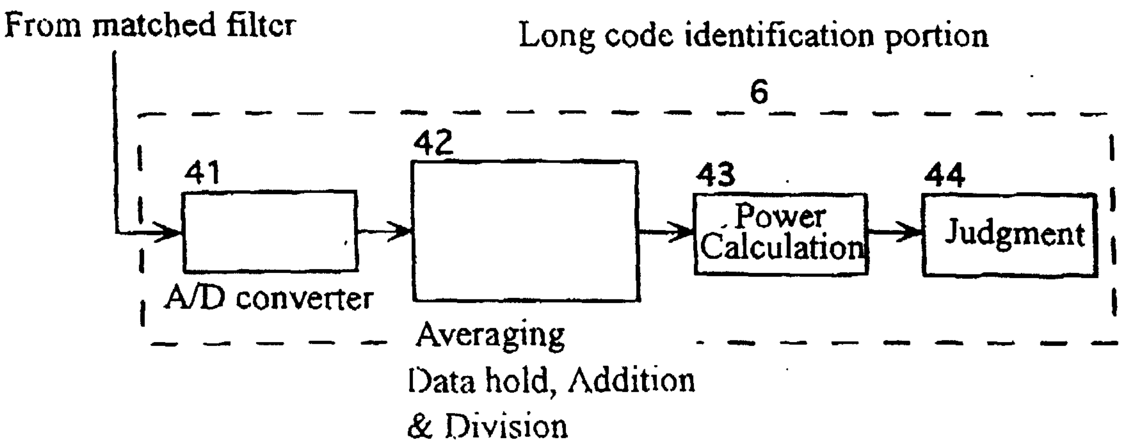
From matched filter
Long code identification portion
6
41
42
43
44
Power Calculation
Judgment
A/D converter
Averaging
Data hold, Addition & Division

Fig.5

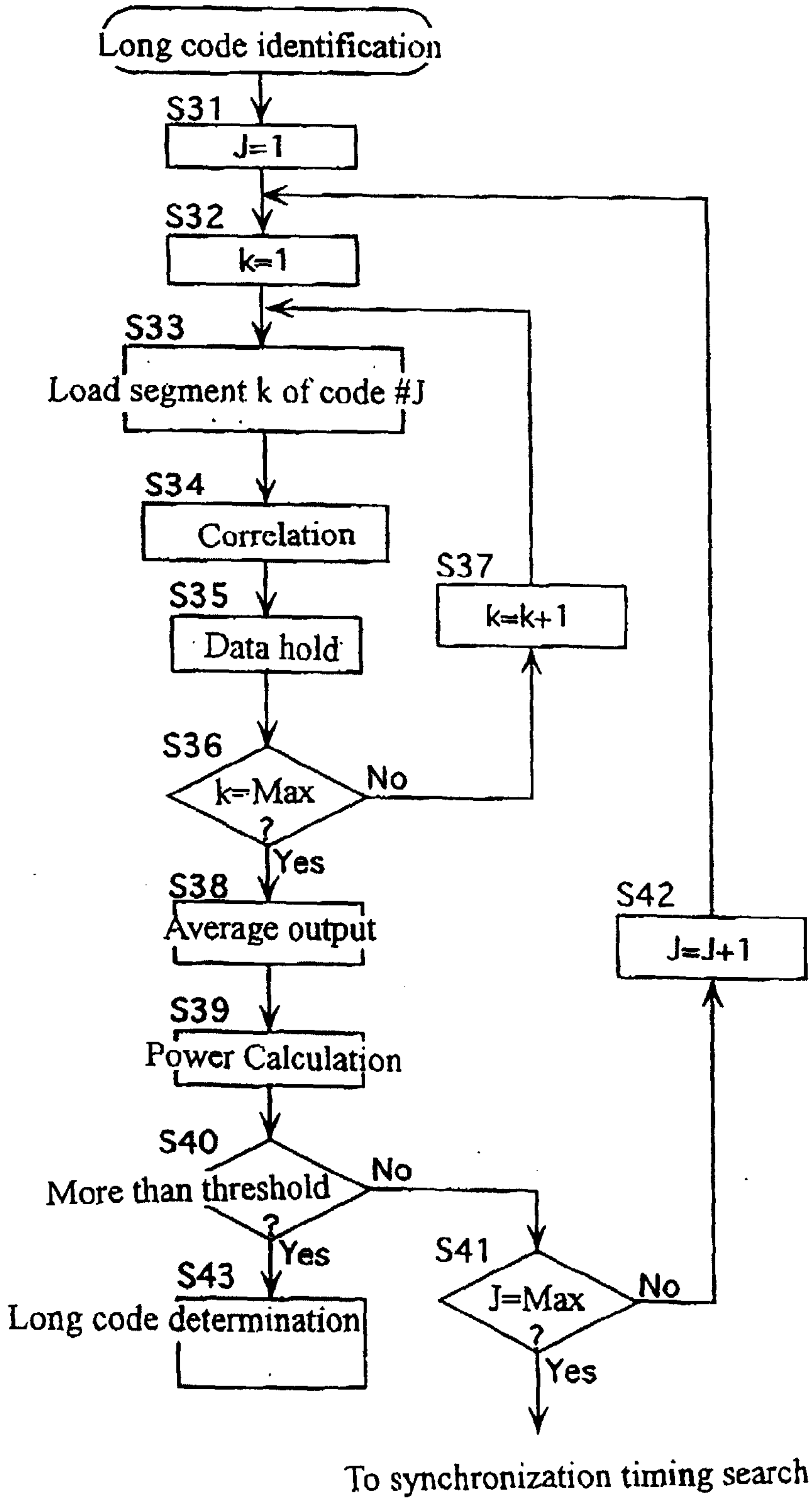
Long code identification
S31
J=1
S32
k=1
S33
Load segment k of code #J
S34
Correlation
S35
Data hold
S36
k=Max ?
No
Yes
S37
k=k+1
S38
Average output
S39
Power Calculation
S40
More than threshold ?
No
Yes
S43
Long code determination
S41
J=Max ?
No
Yes
S42
J=J+1
To synchronization timing search

Fig.6

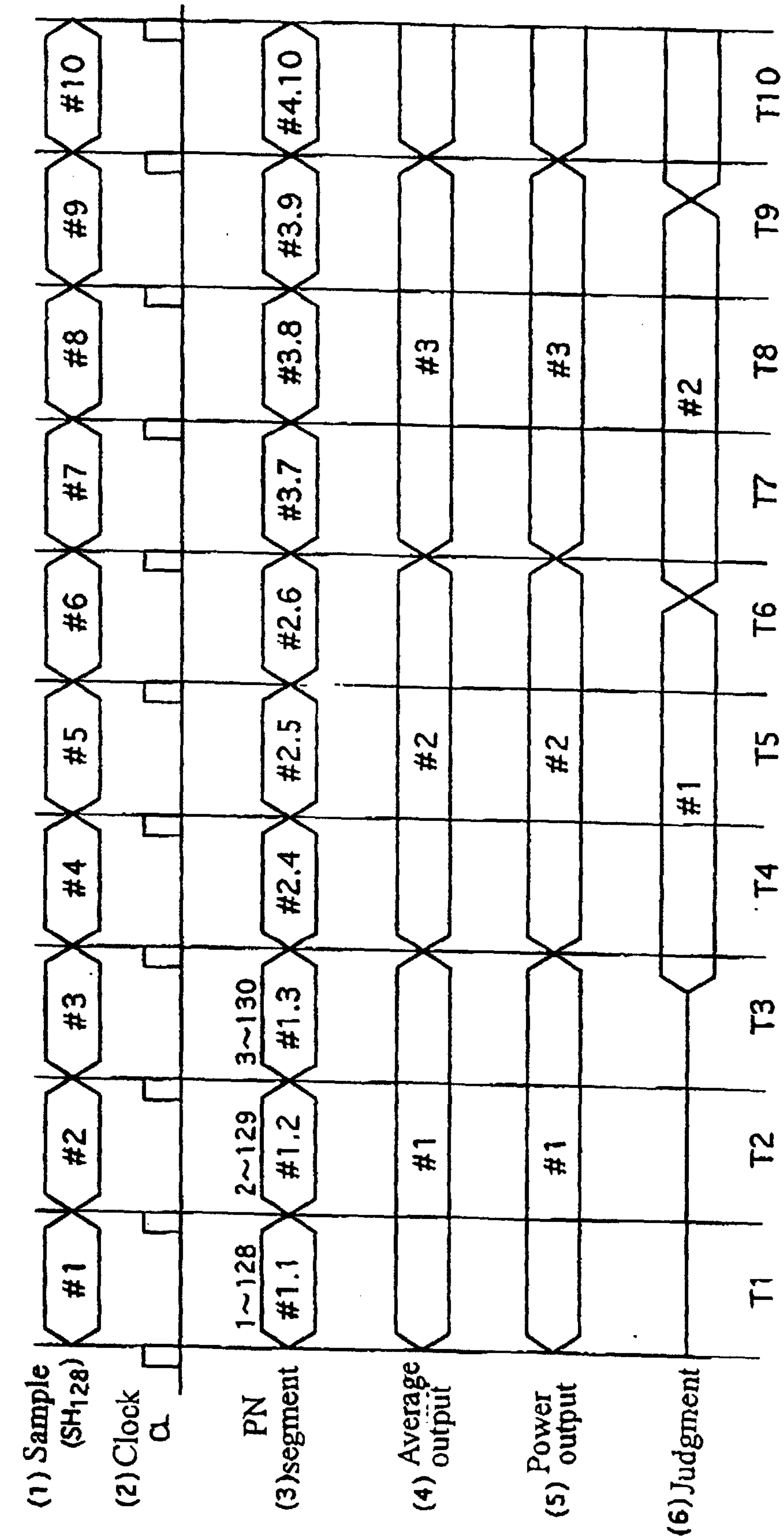
(1) Sample (SH128)
(2) Clock α
PN (3) segment
(4) Average output
(5) Power output
(6) Judgment
#1
#2
#3
#4
#5
#6
#7
#8
#9
#10
1~128
2~129
3~130
#1.1
#1.2
#1.3
#2.4
#2.5
#2.6
#3.7
#3.8
#3.9
#4.10
T1
T2
T3
T4
T5
T6
T7
T8
T9
T10

Fig.7

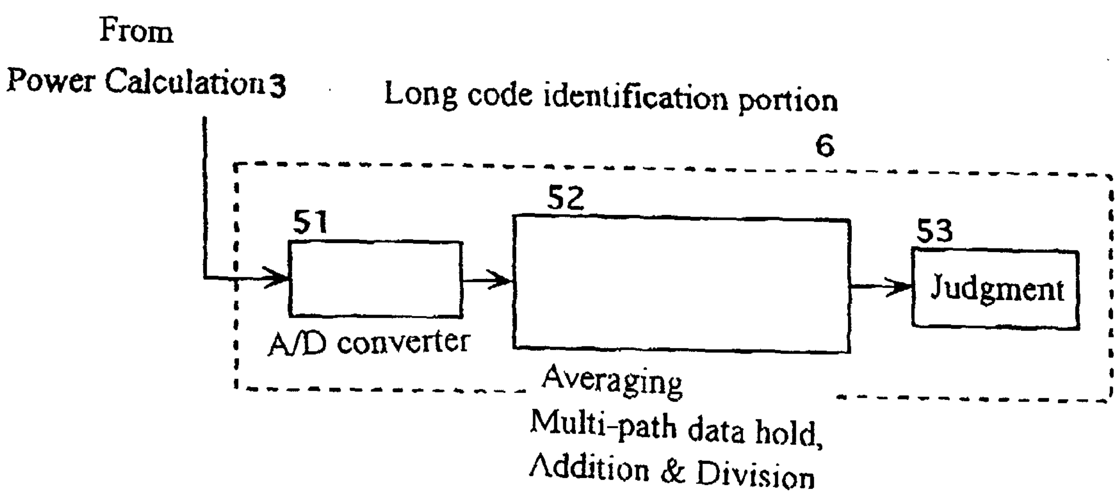
From
Power Calculation 3
Long code identification portion
6
51
52
53
Judgment
A/D converter
Averaging
Multi-path data hold,
Addition & Division

Fig.8

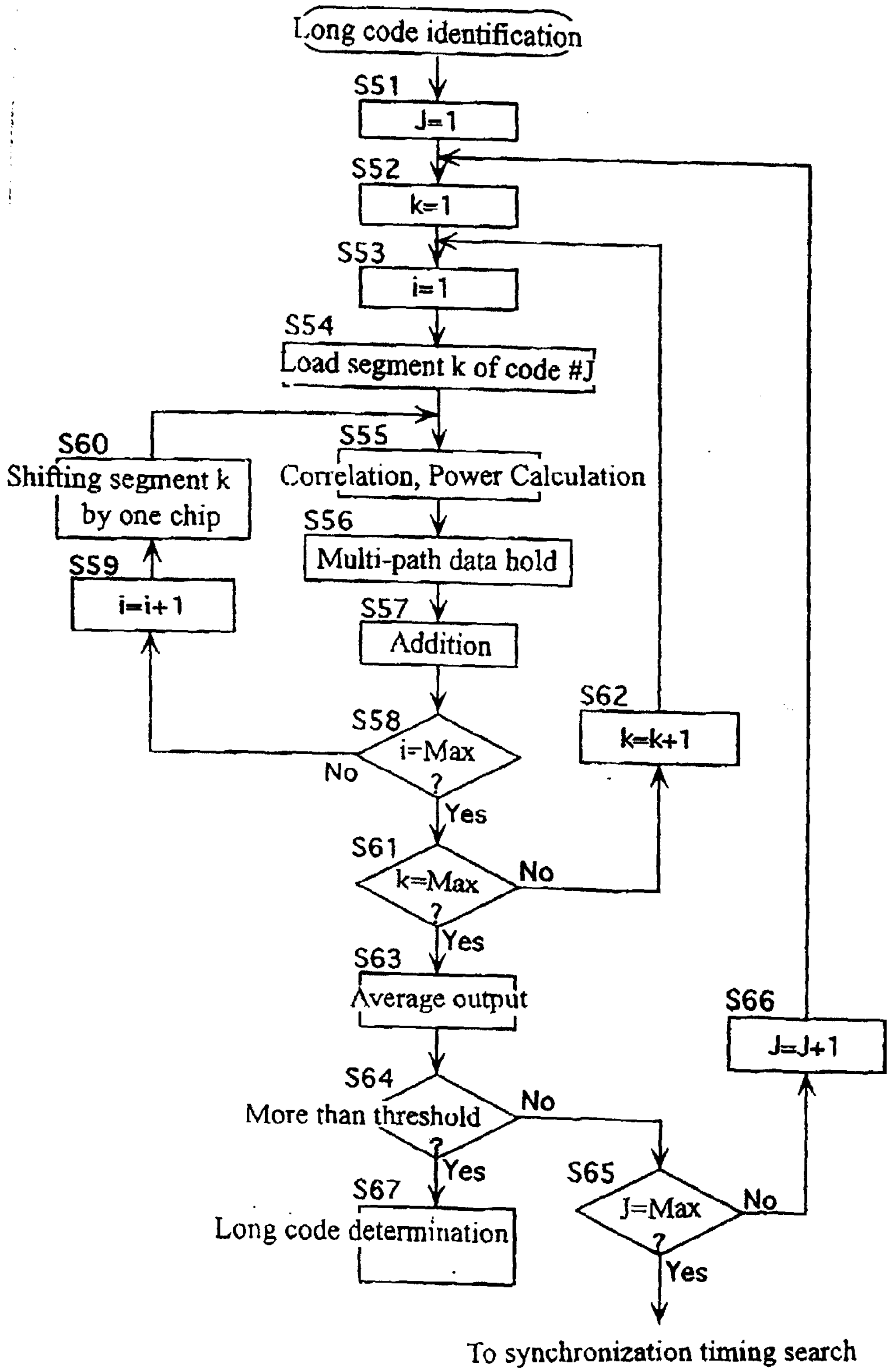
Long code identification
S51
J=1
S52
k=1
S53
i=1
S54
Load segment k of code #J
S55
Correlation, Power Calculation
S56
Multi-path data hold
S57
Addition
S58
i=Max ?
No
Yes
S59
i=i+1
S60
Shifting segment k by one chip
S61
k=Max ?
No
Yes
S62
k=k+1
S63
Average output
S64
More than threshold ?
No
Yes
S65
J=Max ?
No
Yes
S66
J=J+1
S67
Long code determination
To synchronization timing search

Fig.9

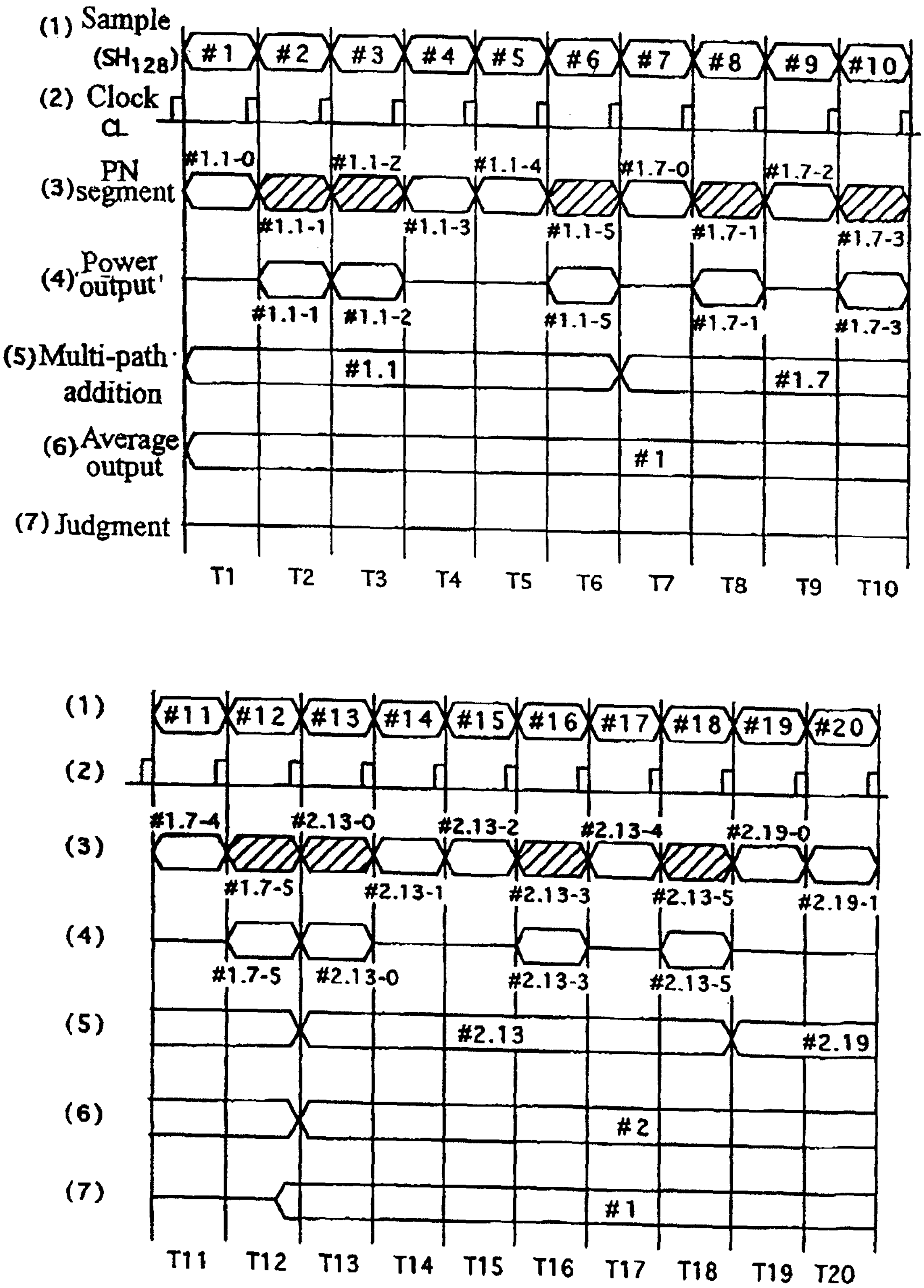
(1) Sample (SH128)
(2) Clock α
(3) PN segment
(4) 'Power output'
(5) Multi-path addition
(6) Average output
(7) Judgment
#1 #2 #3 #4 #5 #6 #7 #8 #9 #10
#1.1-0 #1.1-1 #1.1-2 #1.1-3 #1.1-4 #1.1-5 #1.7-0 #1.7-1 #1.7-2 #1.7-3
#1.1-1 #1.1-2 #1.1-5 #1.7-1 #1.7-3
#1.1
#1.7
#1
T1 T2 T3 T4 T5 T6 T7 T8 T9 T10
(1)
(2)
(3)
(4)
(5)
(6)
(7)
#11 #12 #13 #14 #15 #16 #17 #18 #19 #20
#1.7-4 #1.7-5 #2.13-0 #2.13-1 #2.13-2 #2.13-3 #2.13-4 #2.13-5 #2.19-0 #2.19-1
#1.7-5 #2.13-0 #2.13-3 #2.13-5
#2.13
#2.19
#2
#1
T11 T12 T13 T14 T15 T16 T17 T18 T19 T20

Fig.10

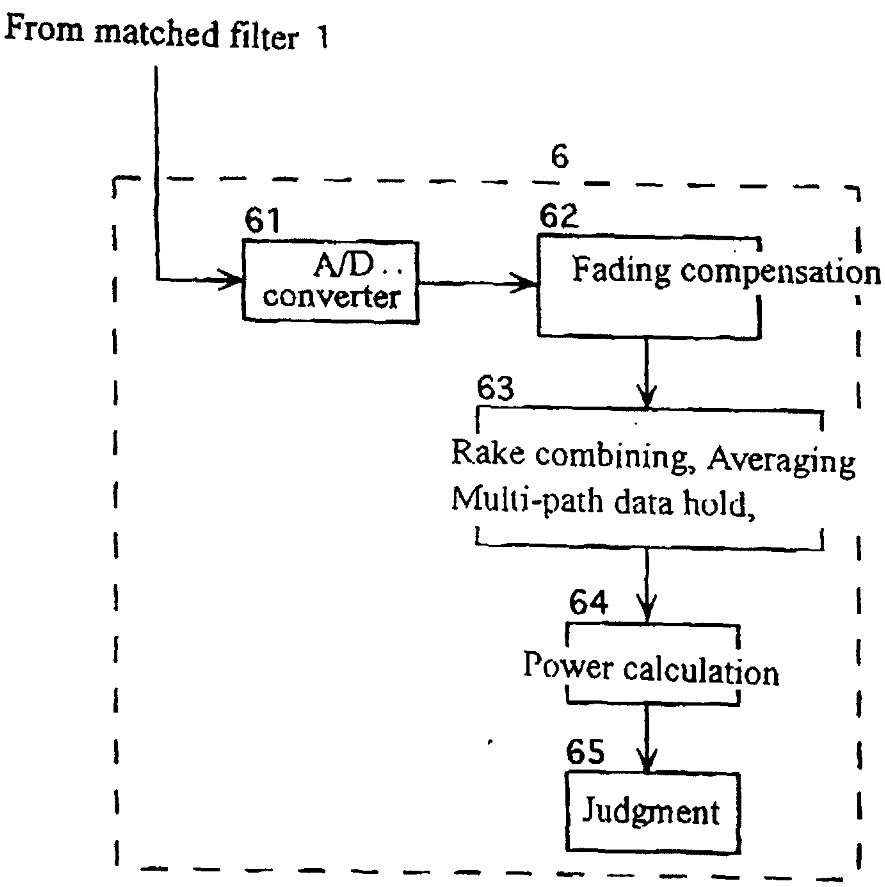
From matched filter 1
6
61
A/D converter
62
Fading compensation
63
Rake combining, Averaging
Multi-path data hold,
64
Power calculation
65
Judgment

Fig.11

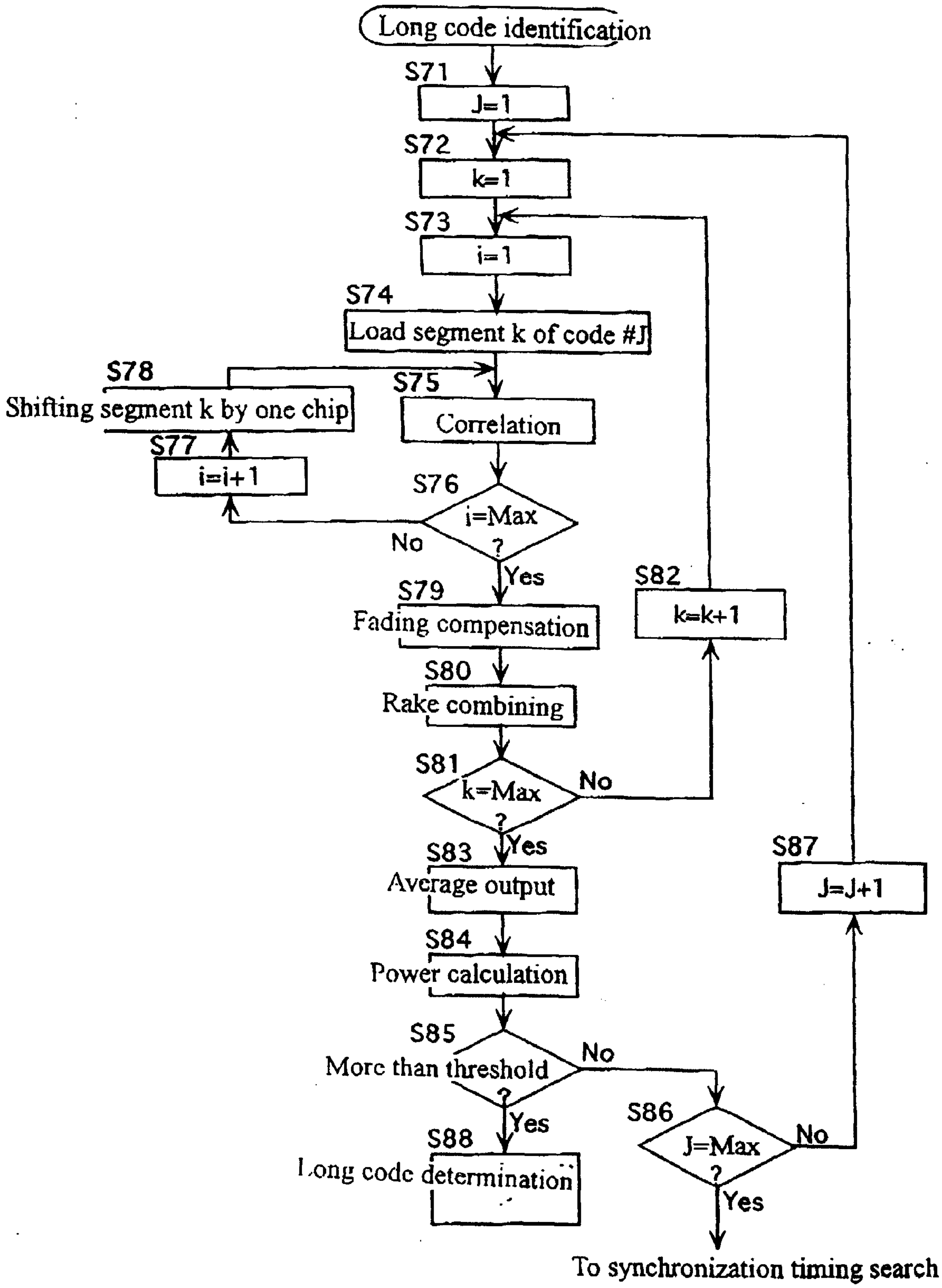
Long code identification
S71
J=1
S72
k=1
S73
i=1
S74
Load segment k of code #J
S78
Shifting segment k by one chip
S75
Correlation
S77
i=i+1
S76
i=Max ?
No
Yes
S79
Fading compensation
S82
k=k+1
S80
Rake combining
S81
k=Max ?
No
Yes
S83
Average output
S87
J=J+1
S84
Power calculation
S85
More than threshold ?
No
Yes
S86
J=Max ?
No
Yes
S88
Long code determination
To synchronization timing search

Fig.12

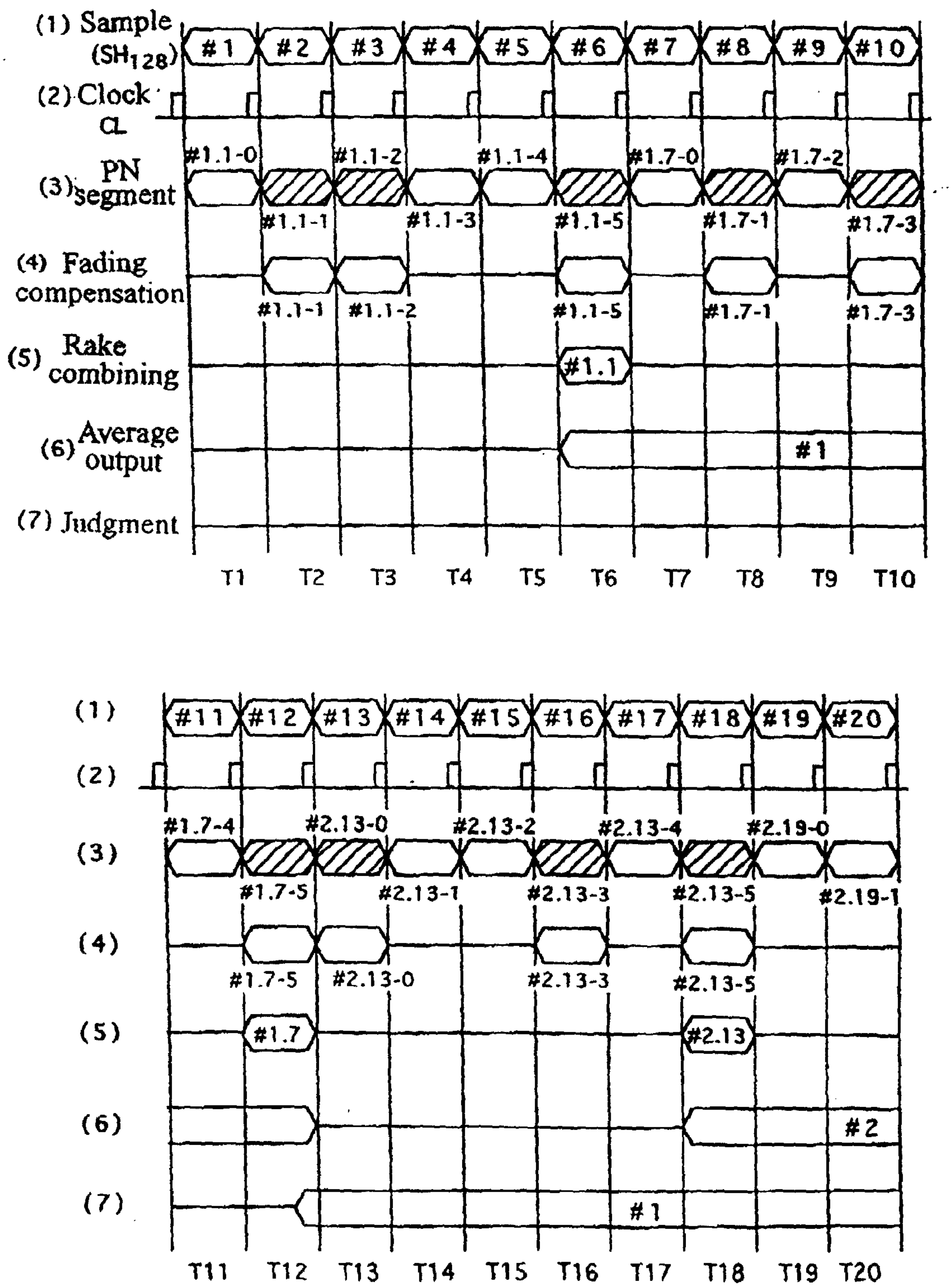
(1) Sample (SH128)
#1 #2 #3 #4 #5 #6 #7 #8 #9 #10
(2) Clock CL
(3) PN segment
#1.1-0 #1.1-2 #1.1-4 #1.7-0 #1.7-2
#1.1-1 #1.1-3 #1.1-5 #1.7-1 #1.7-3
(4) Fading compensation
#1.1-1 #1.1-2 #1.1-5 #1.7-1 #1.7-3
(5) Rake combining
#1.1
(6) Average output
#1
(7) Judgment
T1 T2 T3 T4 T5 T6 T7 T8 T9 T10
(1)
#11 #12 #13 #14 #15 #16 #17 #18 #19 #20
(2)
(3)
#1.7-4 #2.13-0 #2.13-2 #2.13-4 #2.19-0
#1.7-5 #2.13-1 #2.13-3 #2.13-5 #2.19-1
(4)
#1.7-5 #2.13-0 #2.13-3 #2.13-5
(5)
#1.7 #2.13
(6)
#2
(7)
#1
T11 T12 T13 T14 T15 T16 T17 T18 T19 T20

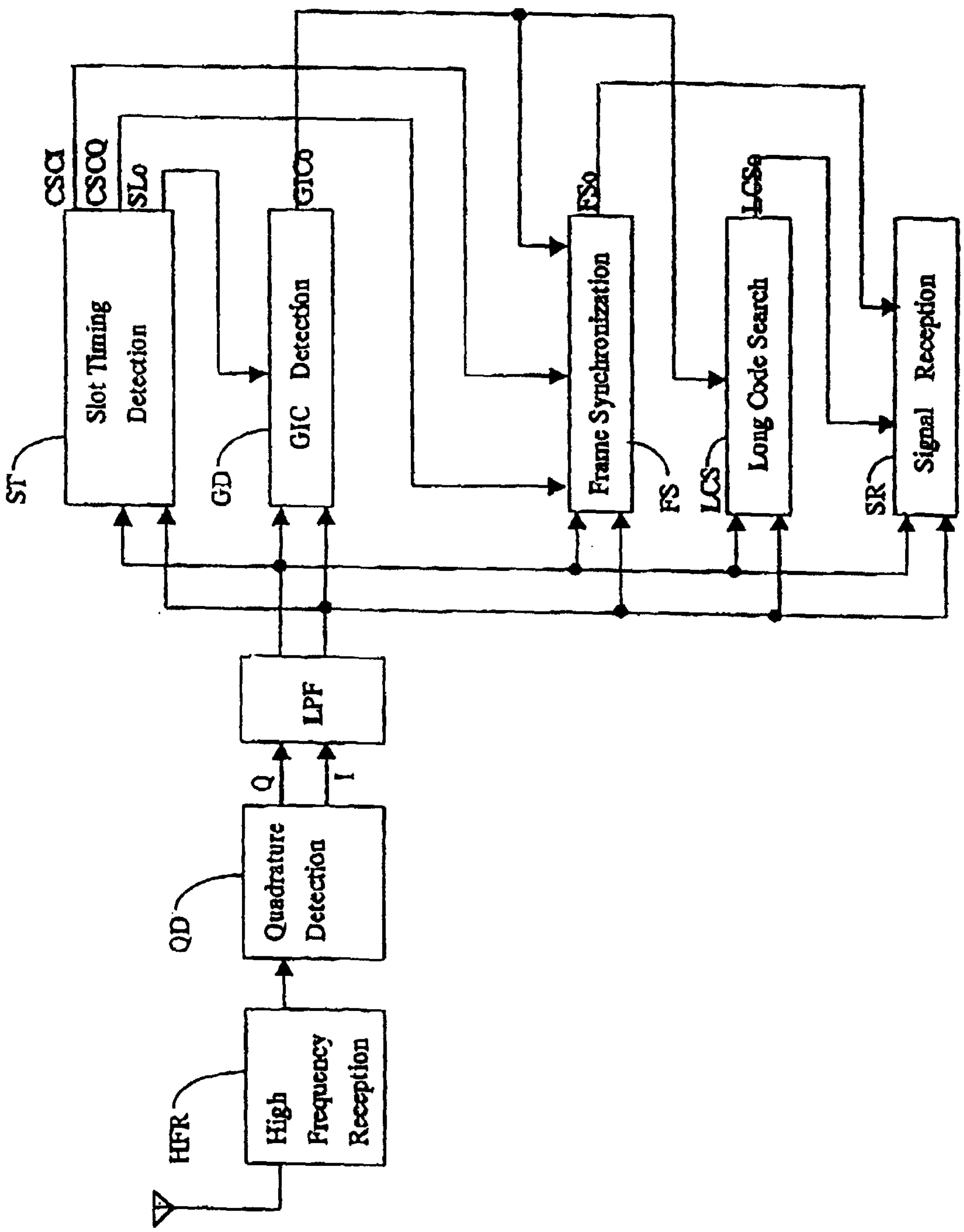
CSCI
CSCQ
SLo
GICo
FSo
LCSo
ST
Slot Timing Detection
GD
GIC Detection
FS
Frame Synchronization
LCS
Long Code Search
SR
Signal Reception
LPF
Q
I
QD
Quadrature Detection
HFR
High Frequency Reception

Fig.13

Fig.14

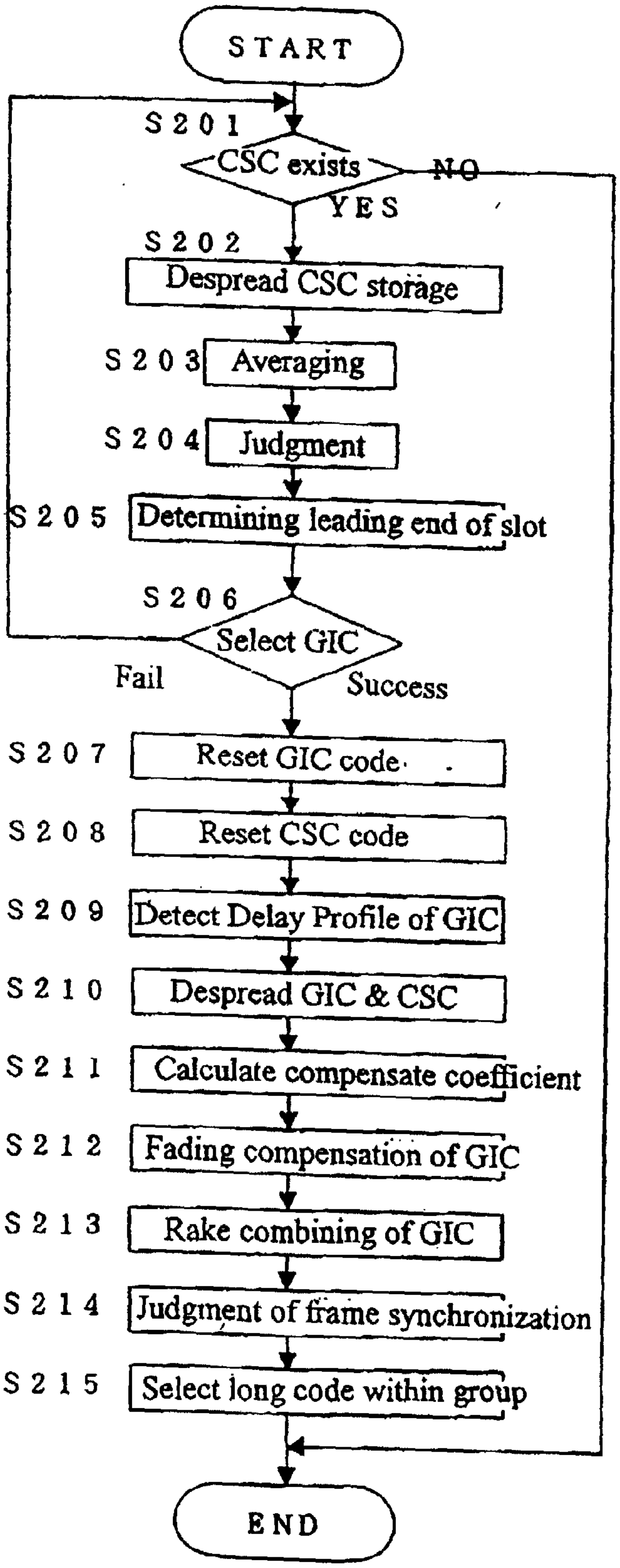
START
S201
CSC exists
NO
YES
S202
Despread CSC storage
S203
Averaging
S204
Judgment
S205
Determining leading end of slot
S206
Select GIC
Fail
Success
S207
Reset GIC code
S208
Reset CSC code
S209
Detect Delay Profile of GIC
S210
Despread GIC & CSC
S211
Calculate compensate coefficient
S212
Fading compensation of GIC
S213
Rake combining of GIC
S214
Judgment of frame synchronization
S215
Select long code within group
END

Fig.15

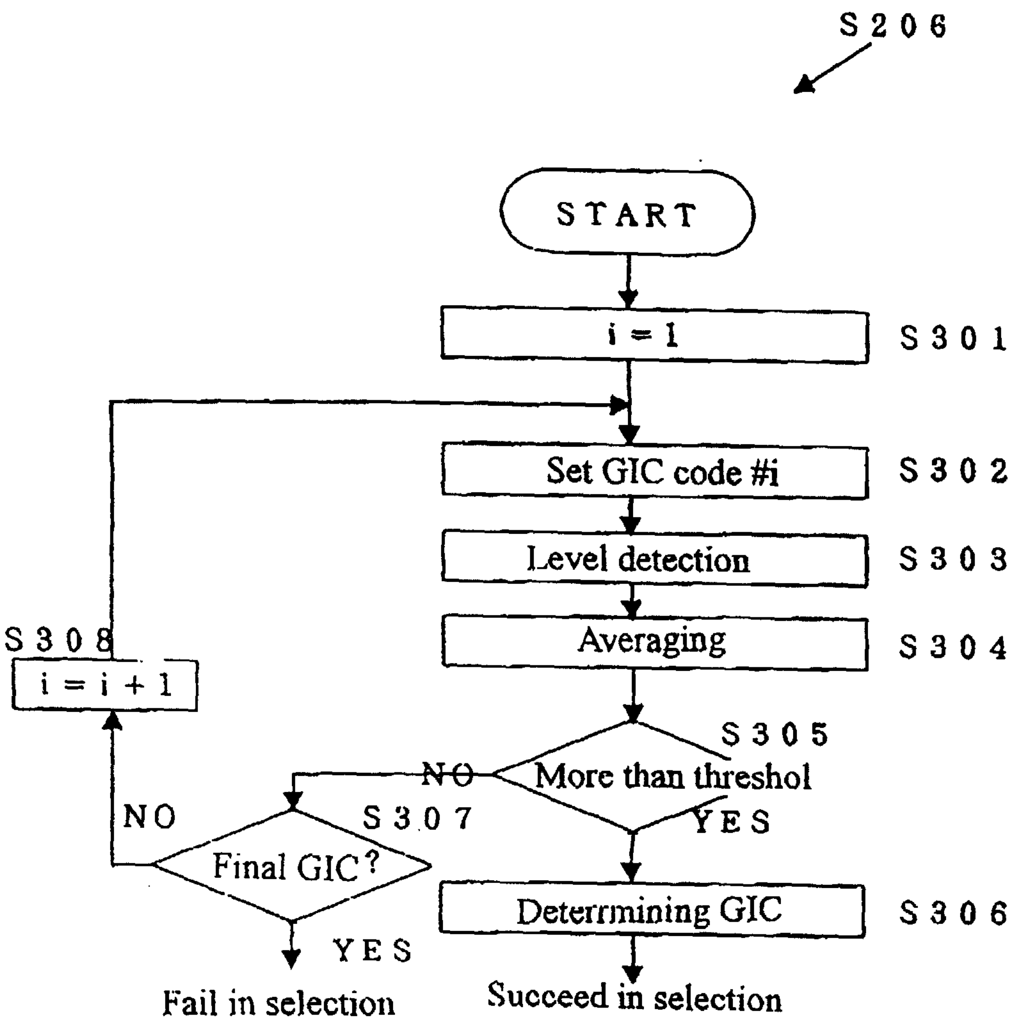
S 2 0 6
START
i = 1
S 3 0 1
Set GIC code #i
S 3 0 2
Level detection
S 3 0 3
Averaging
S 3 0 4
S 3 0 5
More than threshol
NO
YES
Determining GIC
S 3 0 6
Succeed in selection
S 3 0 7
Final GIC ?
NO
YES
Fail in selection
S 3 0 8
i = i + 1

Fig.16A

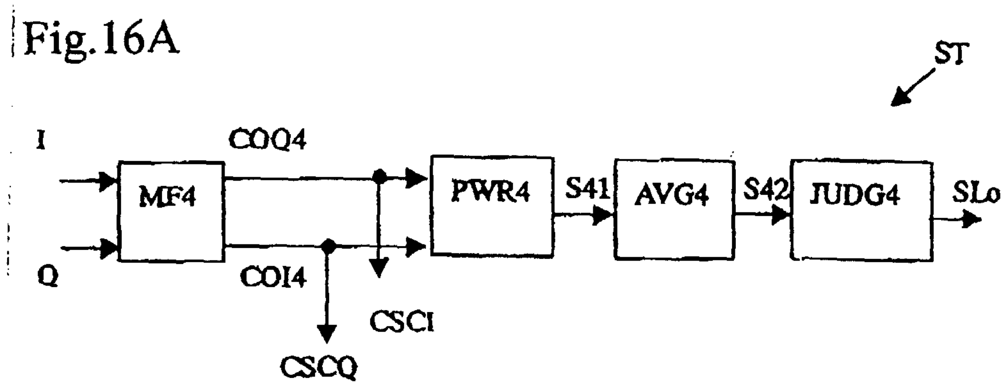


Fig.16B

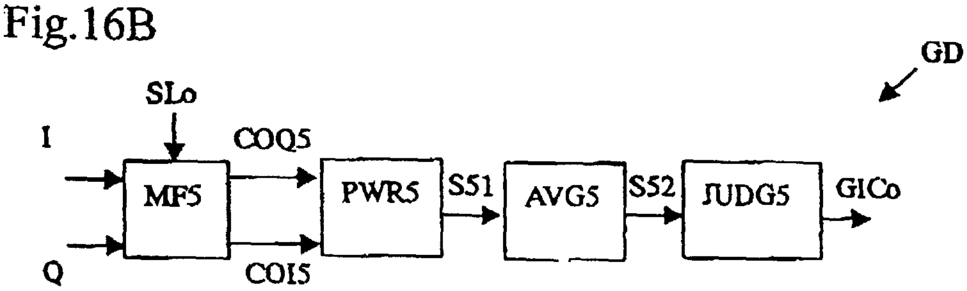


Fig.16C

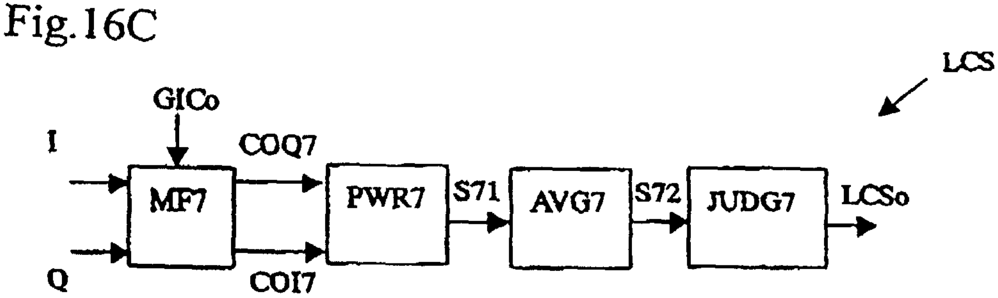


Fig.16D

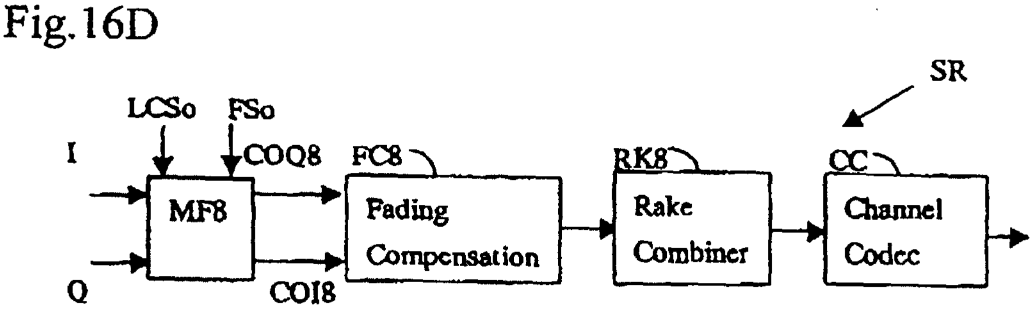

Fig.17

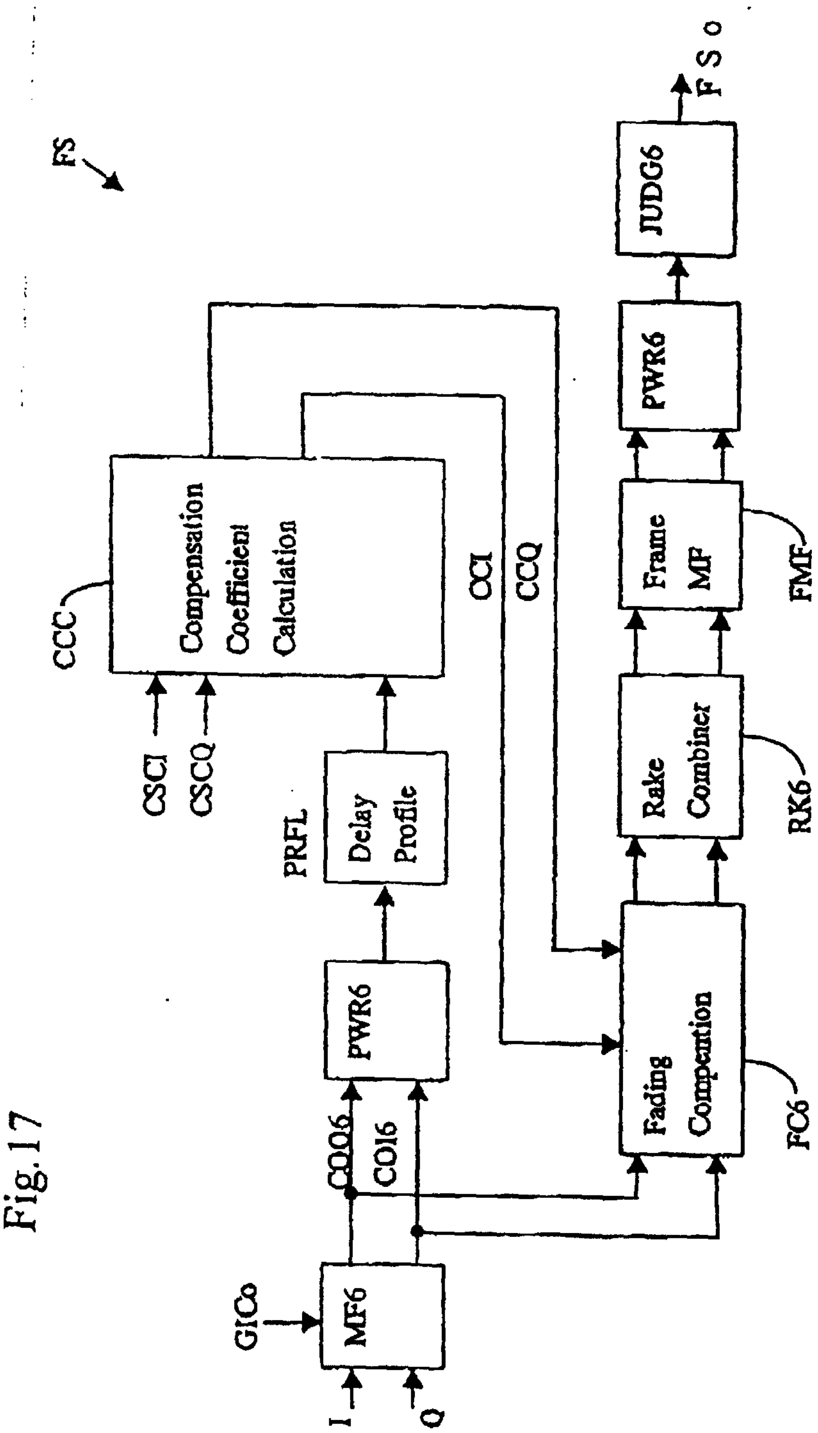
FS
CCC
Compensation Coefficient Calculation
CSCI
CSCQ
PRFL
Delay Profile
PWR6
GICo
MF6
I
Q
CDQ6
CDI6
CCI
CCQ
Fading Compention
FC6
Rake Combiner
RK6
Frame MF
FMF
PWR6
JUDG6
F S o

Fig.18

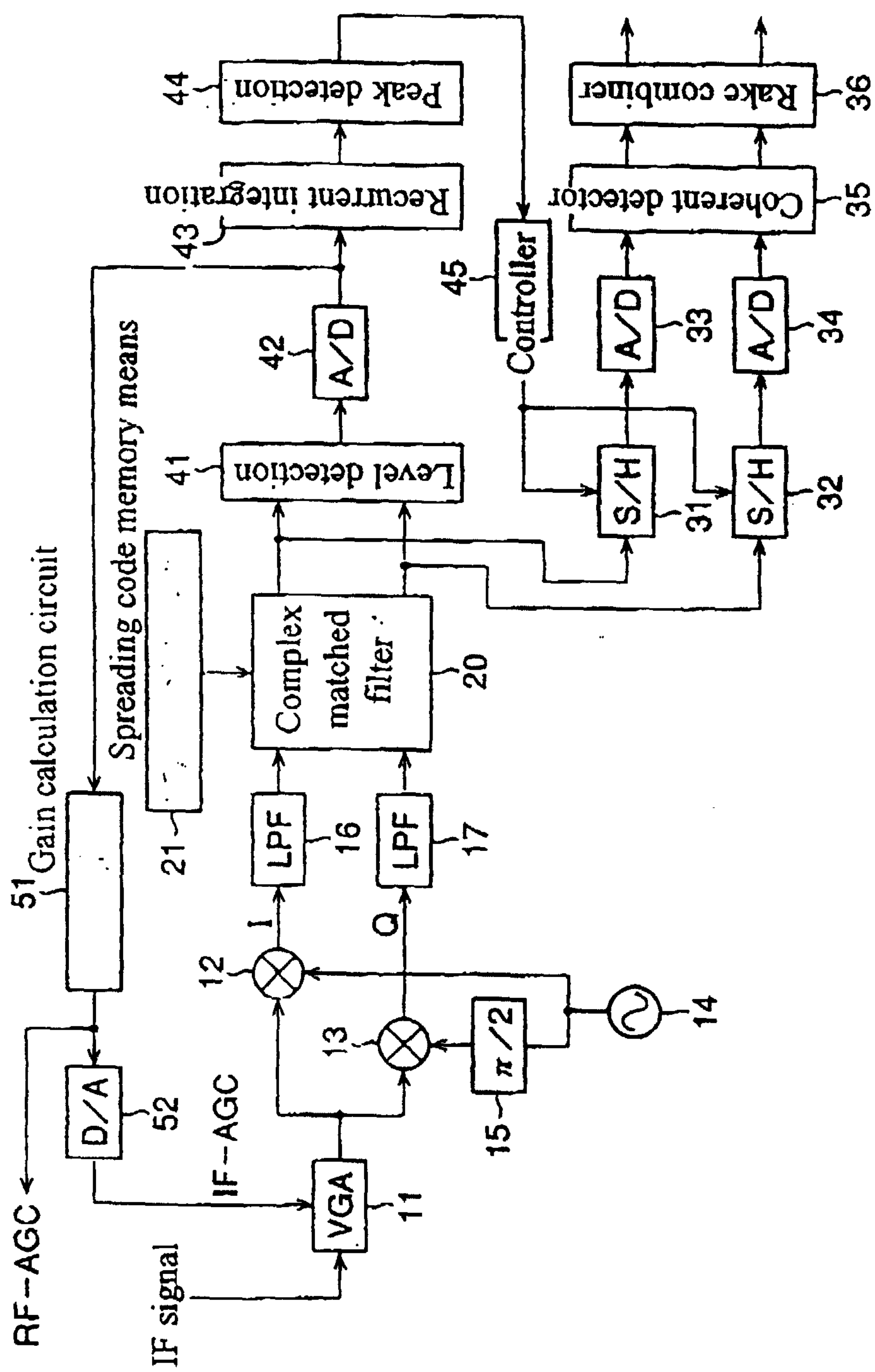
RF-AGC
IF signal
IF-AGC
VGA
11
D/A
52
51
Gain calculation circuit
Spreading code memory means
21
12
13
14
15
π/2
I
Q
LPF
16
LPF
17
Complex matched filter
20
Level detection
41
A/D
42
Recurrent integration
43
Peak detection
44
Controller
45
S/H
31
S/H
32
A/D
33
A/D
34
Coherent detector
35
Rake combiner
36

Fig.19

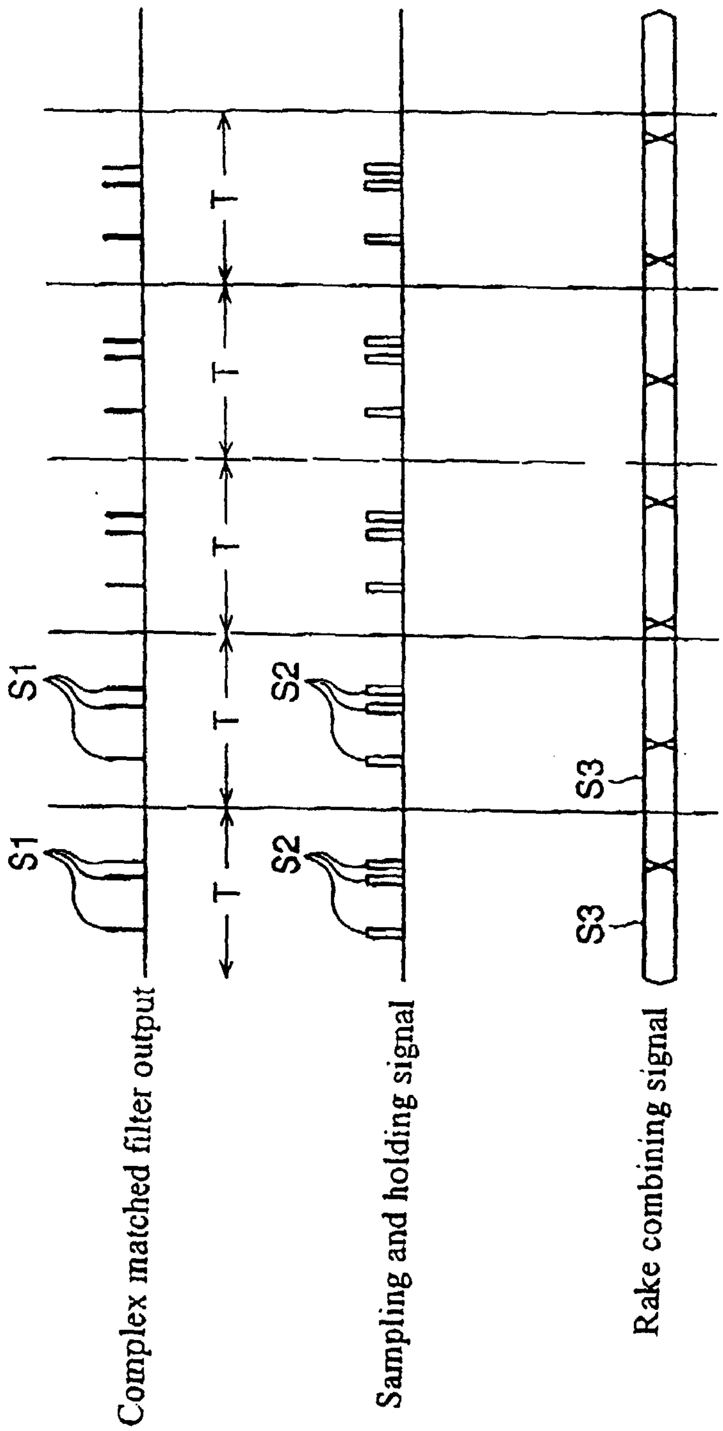
Complex matched filter output
Sampling and holding signal
Rake combining signal
S1
S1
S2
S2
S3
S3
T
T
T
T
T

Fig.20

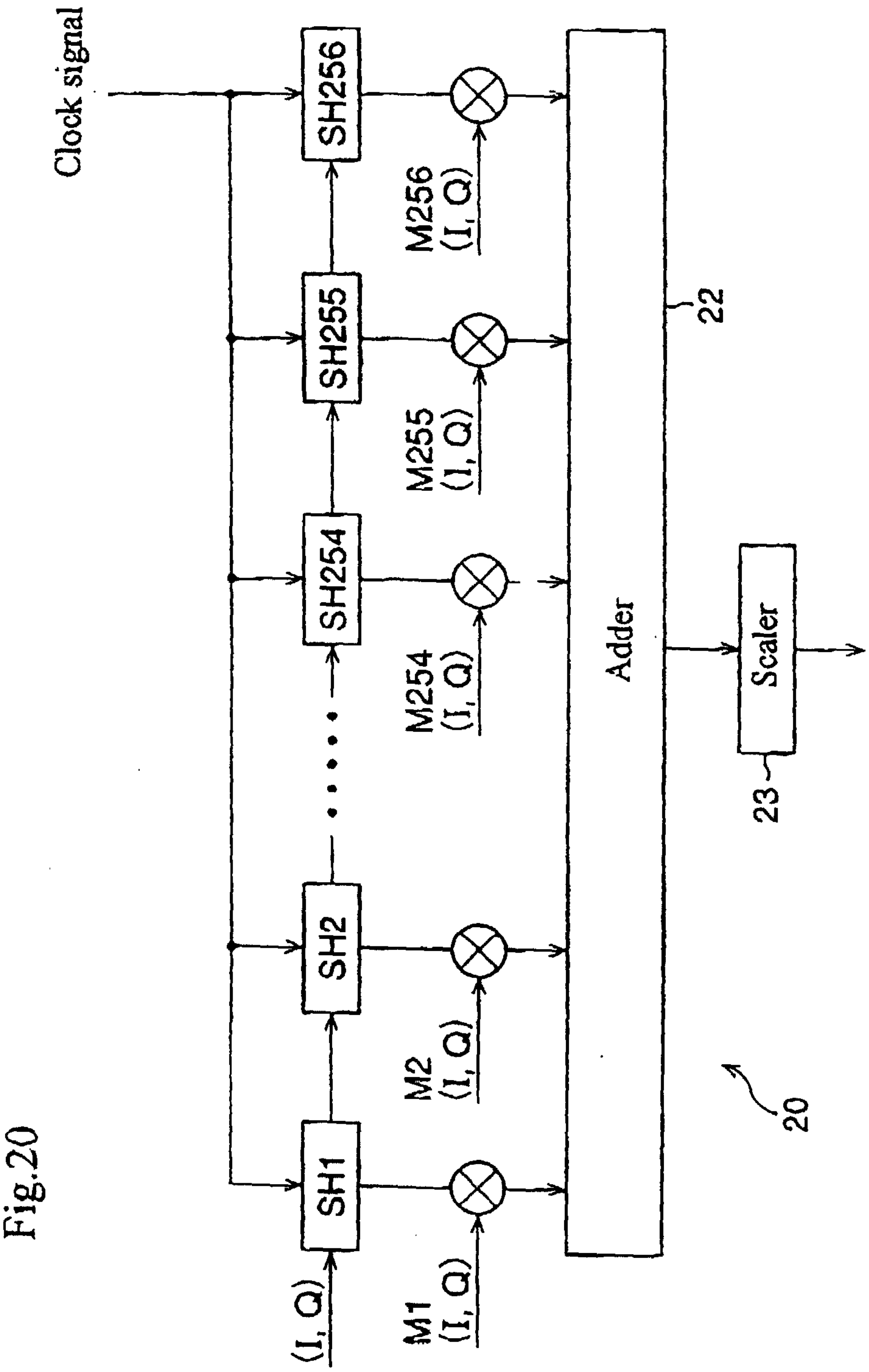
Clock signal
SH1
SH2
SH254
SH255
SH256
(I, Q)
M1 (I, Q)
M2 (I, Q)
M254 (I, Q)
M255 (I, Q)
M256 (I, Q)
Adder
Scaler
20
22
23

Fig.21

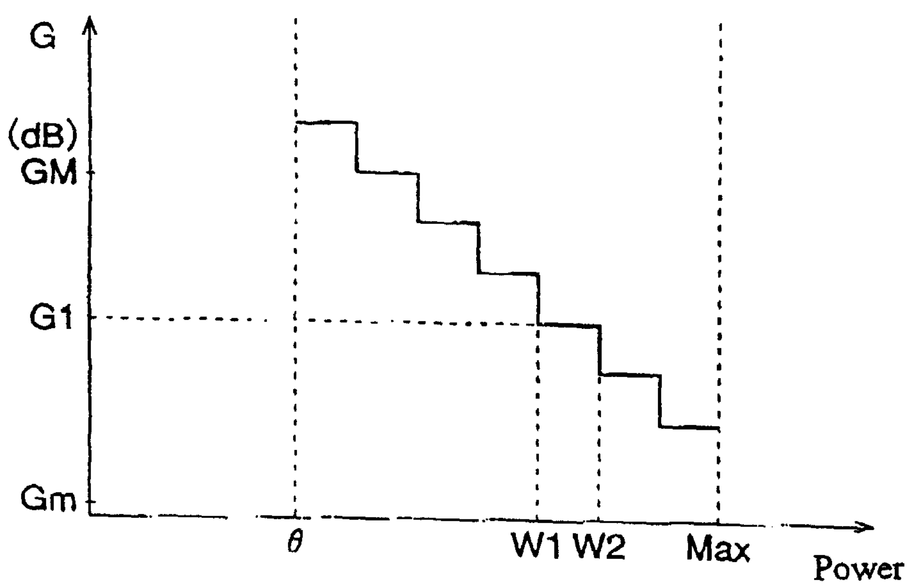

Fig.22

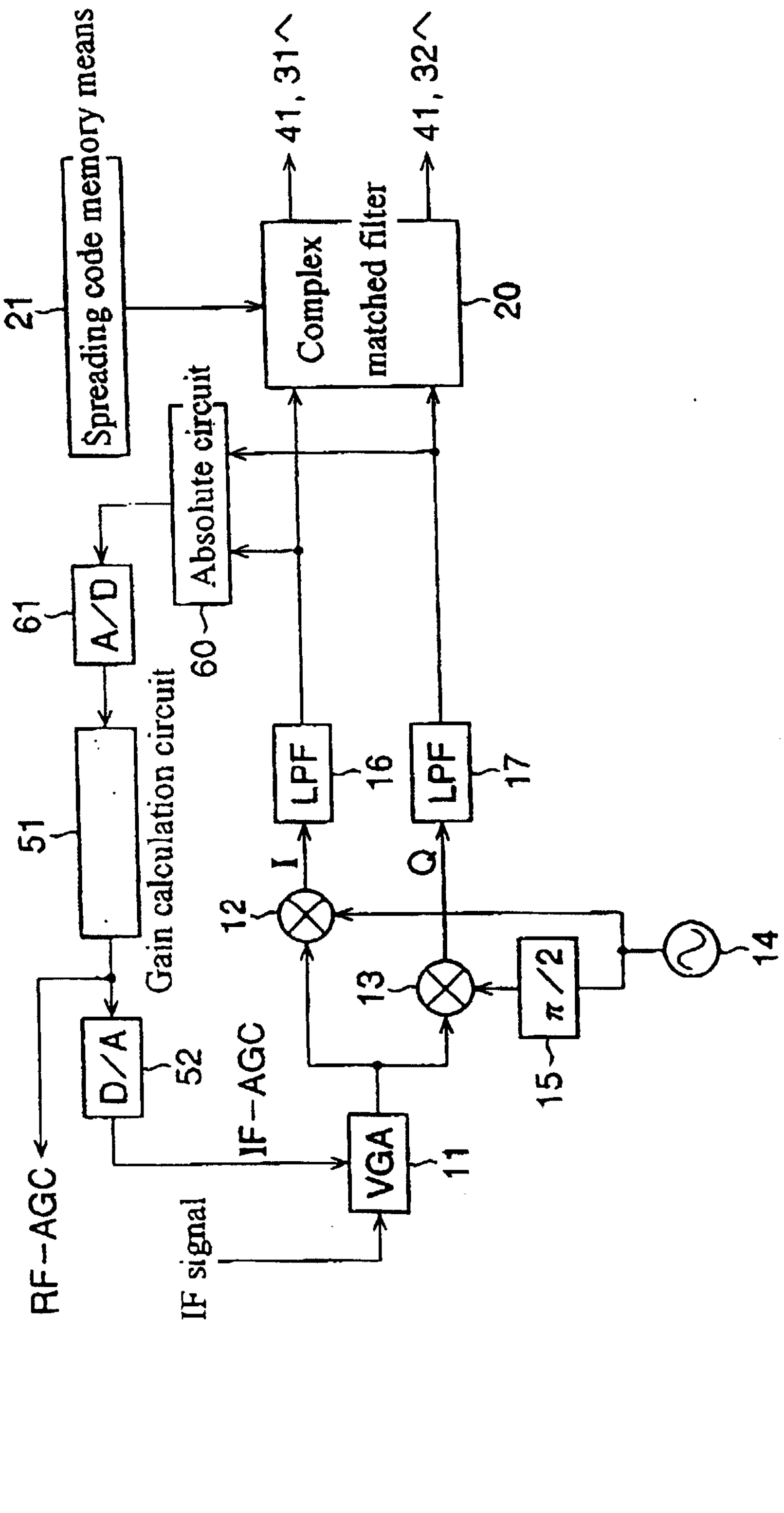
Spreading code memory means
21
Complex
matched filter
20
41, 31^
41, 32^
Absolute circuit
60
A/D
61
Gain calculation circuit
51
D/A
52
RF−AGC
IF−AGC
IF signal
VGA
11
I
Q
12
13
LPF
16
LPF
17
π/2
15
14

Fig.23

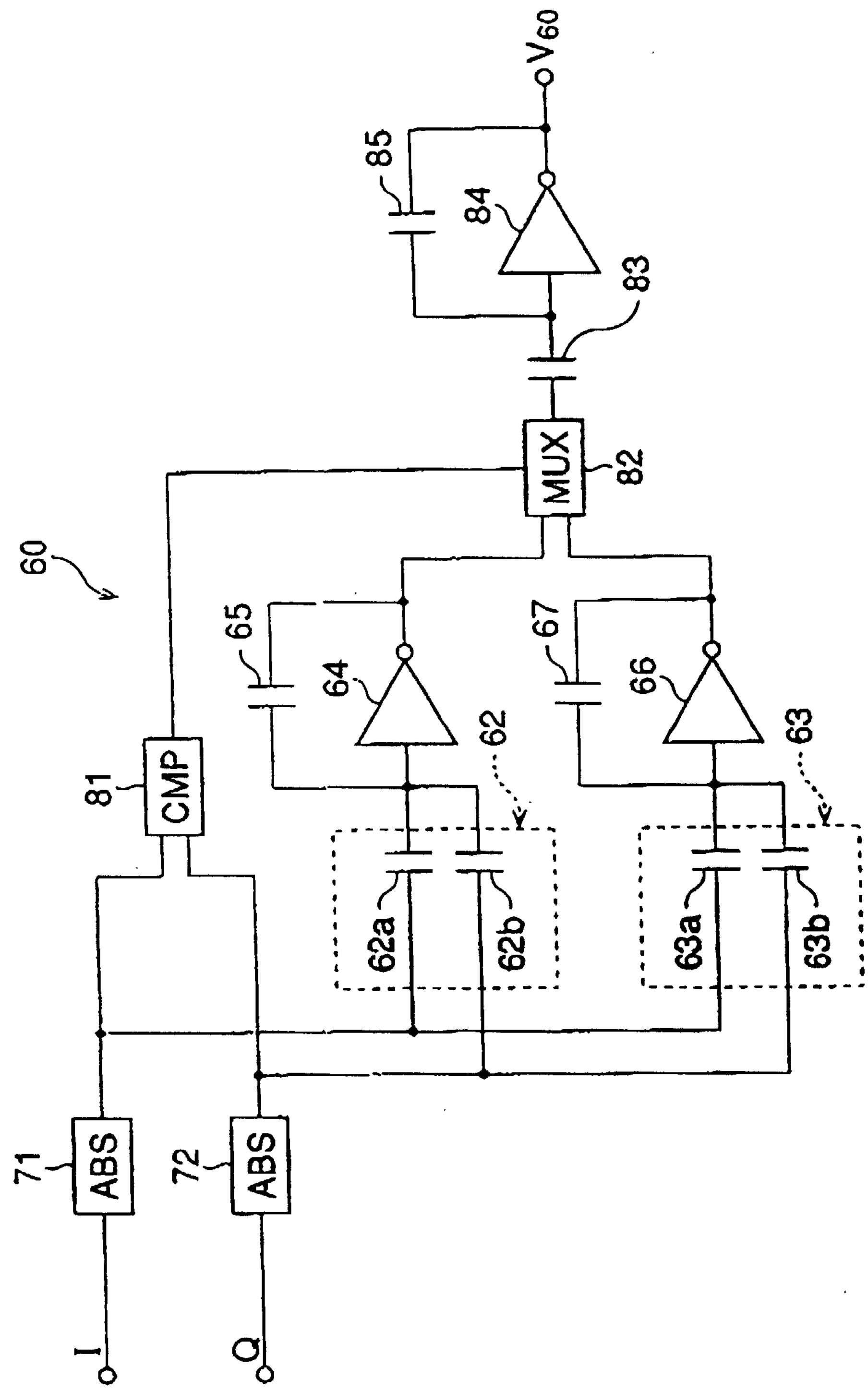
V60
85
84
83
82
MUX
60
65
64
67
66
62
63
81
CMP
62a
62b
63a
63b
71
ABS
72
ABS
I
Q

Fig.24

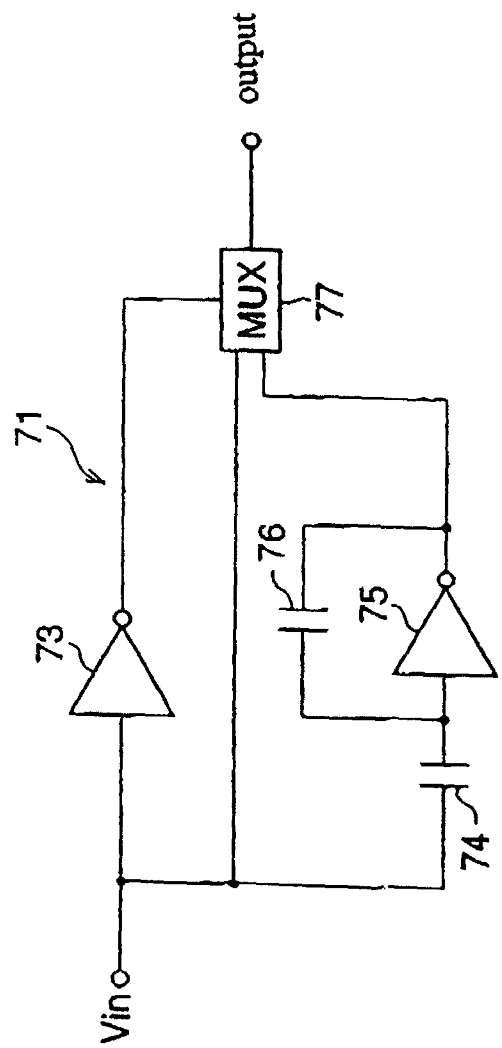

Fig.25

Prior Art

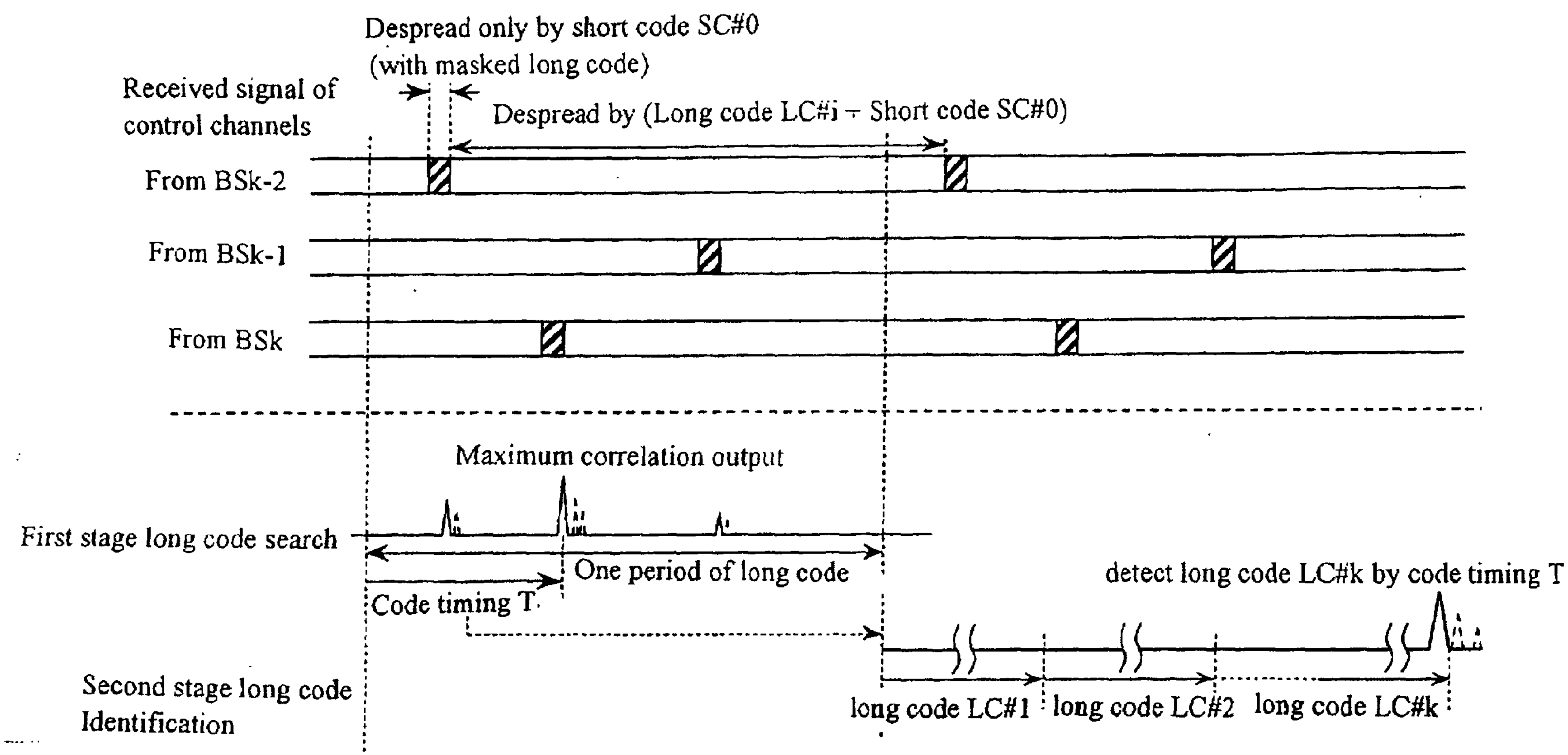

Fig.26

Prior Art

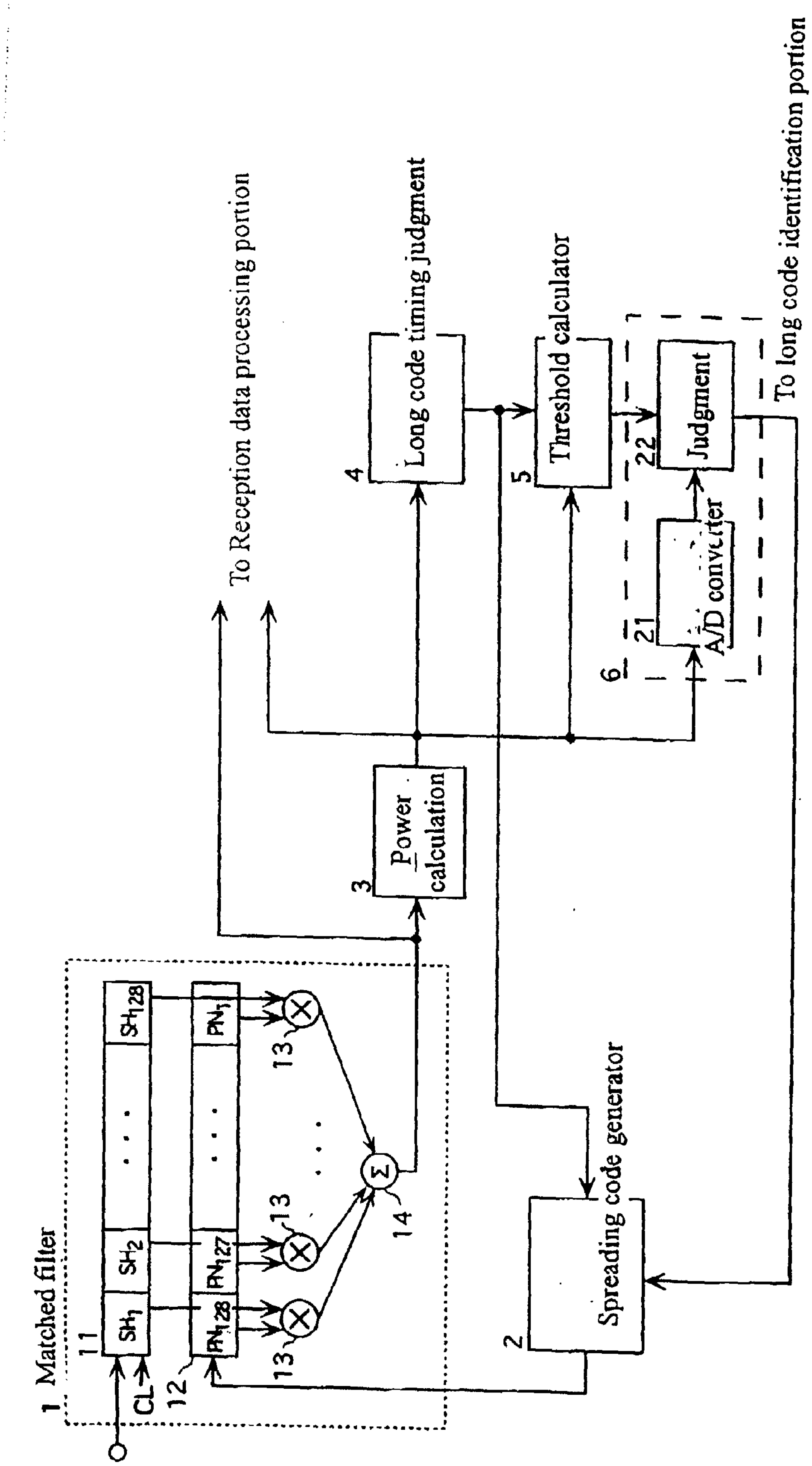

Fig.27

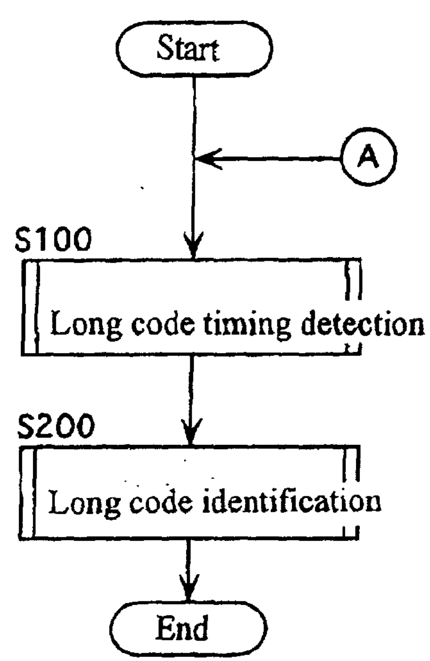


(a)

Prior Art

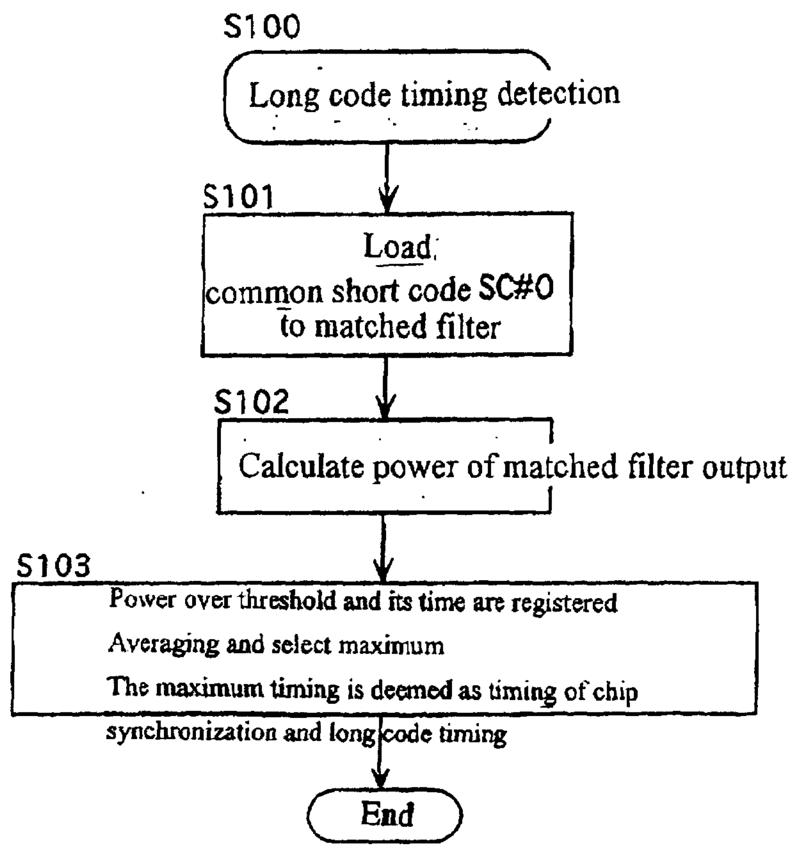


(b)

Fig.28

Prior Art

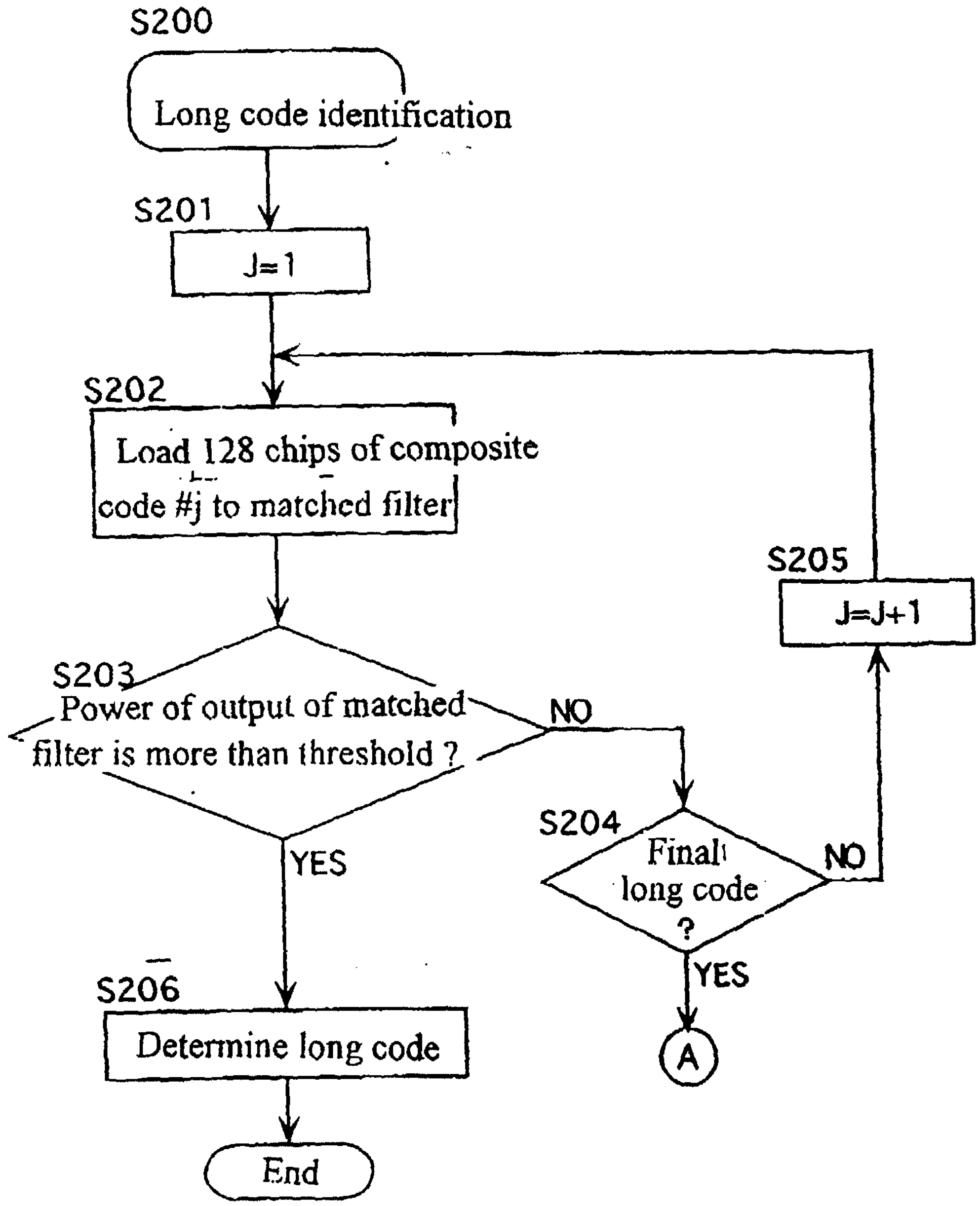

Fig.29

Prior Art

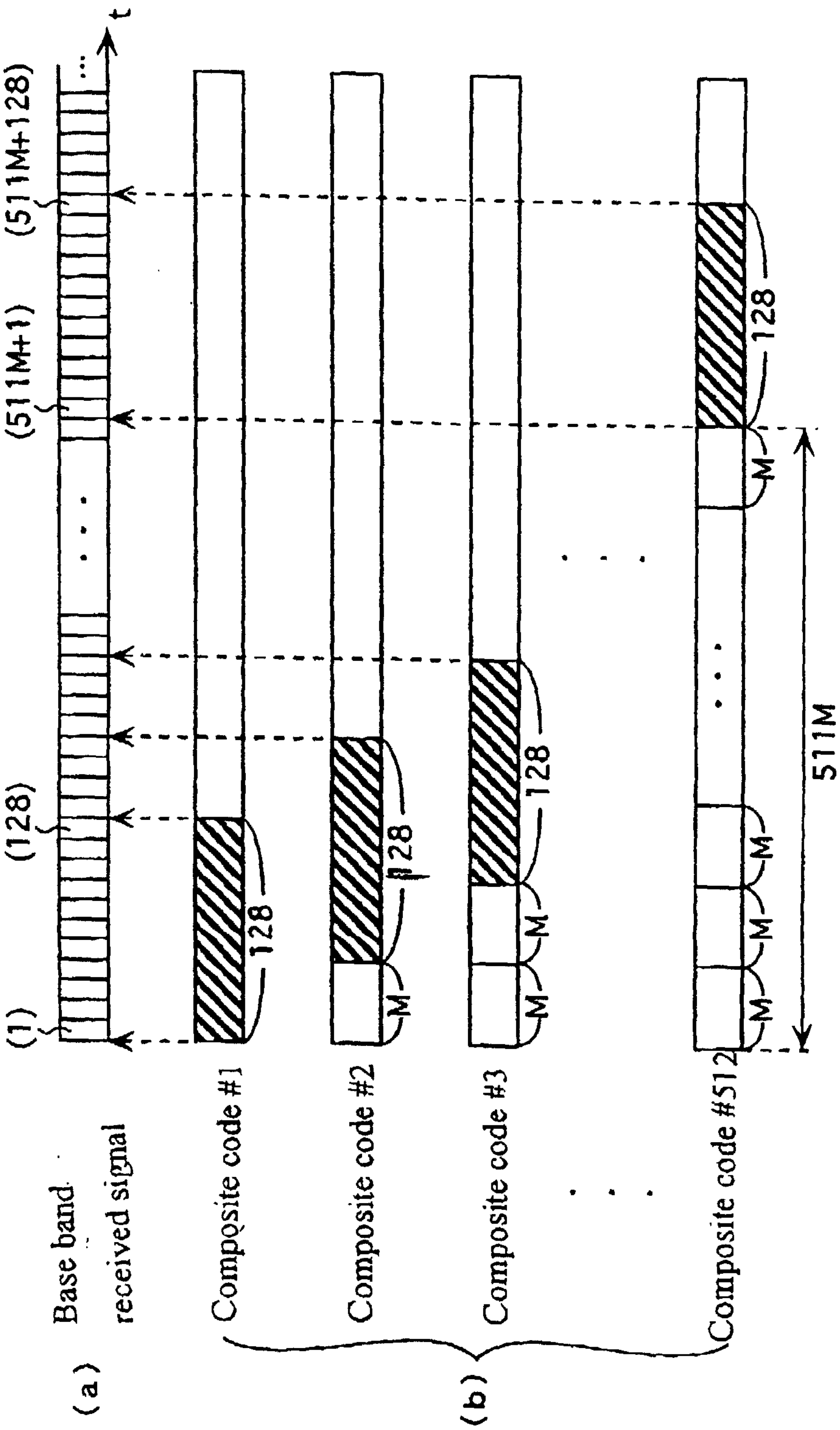

Fig.30

Prior Art